(19) Europäisches Patentamt
European Patent Office
Office européen des brevets

(11) **EP 4 750 132 A1**

(12) **EUROPEAN PATENT APPLICATION**
published in accordance with Art. 153(4) EPC

(43) Date of publication:
**27.05.2026 Bulletin 2026/22**

(21) Application number: **23946109.8**

(22) Date of filing: **21.07.2023**

(51) International Patent Classification (IPC):
***H04W 24/08*** *(2009.01)*

(52) Cooperative Patent Classification (CPC):
**H04W 24/08**

(86) International application number:
**PCT/CN2023/108761**

(87) International publication number:
**WO 2025/020015 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **ZHAO, Qun
Beijing 100085 (CN)**

(74) Representative: **Dehns Germany Partnerschaft
mbB
Theresienstraße 6-8
80333 München (DE)**

(54) **SENSING METHOD, SENSING TRANSMITTER, SENSING RECEIVER, SENSING SYSTEM, AND MEDIUM**

(57)    The present disclosure relates to a sensing method, a sensing transmitter, a sensing receiver, a sensing system, and a medium. The sensing method comprises: sending a sensing reference signal on the basis of N bursts, wherein the sensing reference signal is a reference signal for sensing, the bursts represent a resource unit occupied by the sensing reference signal in a time domain and/or a frequency domain, and N is an integer greater than or equal to 2. According to embodiments of the present disclosure, accurate sensing quantity estimation can be achieved, and wireless sensing is realized.

S2101, the sensing transmitter obtains configuration information, and determines N bursts based on the configuration information

S2102, the sensing transmitter transmits a sensing reference signal based on the N bursts

S2103, the sensing transmitter receives the sensing reference signal.

S2104, the sensing transmitter performs measurement on the sensing reference signal

FIG. 2a

**Description**

TECHNICAL FIELD

The present disclosure relates to the field of communication technologies, and in particular, to a sensing method, a sensing transmitter, a sensing receiver, a sensing system, and a medium.

BACKGROUND

During wireless sensing, it is usually necessary to estimate a distance, an orientation angle (for example, an angle in a horizontal direction and an angle in a vertical direction) and a velocity of a sensing target. In order to realize wireless sensing, it is usually necessary to transmit a reference signal used for sensing.

SUMMARY

Embodiments of the present disclosure propose a sensing method, a sensing transmitter, a sensing receiver, a sensing system, and a medium.

According to a first aspect of the embodiments of the present disclosure, there is provided a sensing method, and the method includes transmitting a sensing reference signal based on N bursts, where the sensing reference signal is a reference signal used for sensing, a burst represents resource units occupied by the sensing reference signal in a time domain and/or a frequency domain, and N is an integer greater than or equal to 2.

According to a second aspect of the embodiments of the present disclosure, there is provided a sensing method, and the method includes: receiving a sensing reference signal based on N bursts, where the sensing reference signal is a reference signal used for sensing, a burst represents resource units occupied by the sensing reference signal in a time domain and/or a frequency domain, and N is an integer greater than or equal to 2; and, performing measurement on the sensing reference signal.

According to a third aspect of the embodiments of the present disclosure, there is provided a sensing transmitter, including: a transceiver module, configured to transmit a sensing reference signal based on N bursts, where the sensing reference signal is a reference signal used for sensing, a burst represents resource units occupied by the sensing reference signal in a time domain and/or a frequency domain, and N is an integer greater than or equal to 2.

According to a fourth aspect of the embodiments of the present disclosure, there is provided a sensing receiver, including: a transceiver module, configured to receive a sensing reference signal based on N bursts, where the sensing reference signal is a reference signal used for sensing, a burst represents resource units occupied by the sensing reference signal in a time domain and/or a frequency domain, and N is an integer greater than or equal to 2; and, a processing module, configured to perform measurement on the sensing reference signal.

According to a fifth aspect of the embodiments of the present disclosure, there is provided a sensing transmitter including one or more processors, where the sensing transmitter is configured to perform the sensing method according to the first aspect.

According to a sixth aspect of the embodiments of the present disclosure, there is provided a sensing receiver including one or more processors, where the sensing receiver is configured to perform the sensing method according to the second aspect.

According to a seventh aspect of the embodiments of the present disclosure, there is provided a sensing system including at least one of a sensing transmitter or a sensing receiver, where the sensing transmitter is configured to implement the sensing method according to the first aspect, and the sensing receiver is configured to implement the sensing method according to the second aspect.

According to an eighth aspect of the embodiments of the present disclosure, there is provided a sensing method, including: transmitting, by a sensing transmitter, a sensing reference signal based on N bursts, where the sensing reference signal is a reference signal used for sensing, a burst represents resource units occupied by the sensing reference signal in a time domain and/or a frequency domain, and N is an integer greater than or equal to 2; and, receiving, by a sensing receiver, a sensing reference signal based on the N bursts, and performing measurement on the sensing reference signal.

According to a ninth aspect of the embodiments of the present disclosure, there is provided a storage medium, where the storage medium stores an instruction, and when the instruction runs on an electronic device, the electronic device is caused to perform the sensing method according to the first aspect, or to perform the sensing method according to the second aspect.

According to the embodiments of the present disclosure, an accurate sensing quantity estimation may be obtained, and wireless sensing may be realized.

BRIEF DESCRIPTION OF THE DRAWINGS

In order to more clearly illustrate the technical solutions in the embodiments of the present disclosure, the accompanying drawings required for describing the embodiments are described below. The following drawings are merely some embodiments of the present disclosure, and do not limit the scope of protection of the present disclosure.

FIG. 1a is an exemplary schematic diagram of a sensing system according to an embodiment of the present disclosure.
FIG. 1b is an exemplary schematic diagram of a sensing system according to an embodiment of the present disclosure.
FIG. 2a is an exemplary flowchart of a sensing method according to an embodiment of the present disclosure.
FIG. 2b is an exemplary flowchart of a sensing method according to an embodiment of the present disclosure.
FIG. 3 is a schematic diagram of a time-frequency resource grid including two bursts according to an embodiment of the present disclosure.
FIG. 4a is an exemplary flowchart of a sensing method according to an embodiment of the present disclosure.
FIG. 4b is an exemplary flowchart of a sensing method according to an embodiment of the present disclosure.
FIG. 4c is an exemplary flowchart of a sensing method according to an embodiment of the present disclosure.
FIG. 5a is an exemplary flowchart of a sensing method according to an embodiment of the present disclosure.
FIG. 5b is an exemplary flowchart of a sensing method according to an embodiment of the present disclosure.
FIG. 6a is an exemplary schematic diagram of a sensing transmitter according to an embodiment of the present disclosure.
FIG. 6b is an exemplary schematic diagram of a sensing receiver according to an embodiment of the present disclosure.
FIG. 7 is an exemplary schematic diagram of an electronic device according to an embodiment of the present disclosure.

DETAILED DESCRIPTION

Embodiments of the present disclosure propose a sensing method, a sensing transmitter, a sensing receiver, a sensing system, and a medium.

According to a first aspect, in an embodiment of the present disclosure, there is provided a sensing method. The method includes transmitting a sensing reference signal based on N bursts, where the sensing reference signal is a reference signal used for sensing, a burst represents resource units occupied by the sensing reference signal in a time domain and/or a frequency domain, and N is an integer greater than or equal to 2.

In the foregoing embodiment, the sensing reference signal is transmitted based on the N bursts, which is conducive to performing measurement on the sensing reference signal within different bursts. By combining the measurement results of the sensing reference signal within different bursts, an accurate sensing quantity estimation may be obtained, thus realizing wireless sensing.

In combination with some embodiments of the first aspect, in some embodiments, bandwidths occupied by the N bursts in the frequency domain are different from each other, and/or frequency domain intervals between orthogonal frequency division multiplexing (OFDM) subcarriers occupied by the N bursts in the frequency domain are different from each other.

In the foregoing embodiment, since the bandwidths occupied by the N bursts in the frequency domain are different from each other, the bandwidth of the sensing reference signal within each burst is different from each other. Therefore, by combining the measurement results of the sensing reference signal within different bursts, a high-accuracy estimation of the sensing quantity may be obtained. Since the frequency domain intervals between the OFDM subcarriers occupied by the N bursts in the frequency domain are different from each other, the frequency domain density of the sensing reference signal within each burst is different from each other. Therefore, by combining the measurement results of the sensing reference signal within different bursts, the problem of frequency domain under-sampling and ambiguity in the sensing quantity may be avoided. Taking that the sensing type is a speed as an example, the speed resolutions of different bursts are inconsistent with each other, and the anti-interference and anti-noise capabilities of the measurement results of different bursts are inconsistent with each other. For example, a burst with a high speed-resolution is poor in anti-interference, and a burst with a low speed resolution is strong in anti-interference. Therefore, by synthesizing the N bursts and an applicable scenario of each burst, a more accurate speed may be obtained in a weighted or non-linear manner. When the attributes (such as the bandwidths) of the N bursts are the same, by synthesizing the measurement results of the N bursts, only a measurement result in which a random error (such as A/D quantization) is overcome can be obtained, thus the robustness is low.

In combination with some embodiments of the first aspect, in some embodiments, based on the time domain in which each burst is located, a bandwidth occupied by a later burst is greater than a bandwidth occupied by an earlier burst, and a frequency domain interval between OFDM subcarriers occupied by the later burst is greater than a frequency domain interval between OFDM subcarriers occupied by the earlier burst; or, based on the time domain in which each burst is located, the bandwidth occupied by the later burst is less than the bandwidth occupied by the earlier burst, and the frequency domain interval between OFDM subcarriers occupied by the later burst is less than the frequency domain interval between OFDM subcarriers occupied by the earlier burst; or, based on the time domain in which each burst is located, the bandwidth occupied by the later burst is greater than or less than the bandwidth occupied by the earlier burst, and the quantities of OFDM subcarriers occupied by the N bursts are the same; or, based on the time domain in which each burst is located, the frequency domain interval between OFDM subcarriers occupied by the later burst is greater than or less than the frequency domain interval between OFDM subcarriers occupied by the earlier burst, and the quantities of OFDM subcarriers occupied by the N bursts are the same.

In the foregoing embodiment, the bandwidths occupied by the N bursts in the frequency domain and the frequency domain intervals between the occupied OFDM subcarriers are in the same progressive change, that is, the bandwidths of the N bursts and the frequency domain densities of the N bursts are in opposite progressive change. By performing measurement on the sensing reference signal within each burst, a high-accuracy and unique (non-ambiguous) estimation of the sensing quantity may be obtained. On the one hand, higher sensing accuracy may be obtained; and on the other hand, the problem of ambiguity in sensing caused by frequency domain under-sampling may be avoided.

In combination with some embodiments of the first aspect, in some embodiments, patterns of OFDM symbols occupied by the N bursts in the time domain are the same.

In the foregoing embodiment, since the N bursts have the same time domain pattern, the configuration of the N bursts may be caused to be simpler.

In combination with some embodiments of the first aspect, in some embodiments, resource units occupied by a burst in the time domain are indicated by a first set, and/or resource units occupied by a burst in the frequency domain are indicated by a second set, where the first set includes numbers for OFDM symbols occupied by a burst, and the second set includes numbers for OFDM subcarriers occupied by a burst.

In the foregoing embodiment, the set of resource particles where the sensing reference signal within each burst is located may be obtained through the numbers for OFDM symbols in the first set and/or the numbers for OFDM subcarriers in the second set.

In combination with some embodiments of the first aspect, in some embodiments, the method includes: obtaining configuration information, and determining the N bursts based on the configuration information.

In the foregoing embodiment, the N bursts may be configured through the configuration information.

In combination with some embodiments of the first aspect, in some embodiments, the method includes: receiving the sensing reference signal, and performing measurement on the sensing reference signal.

In the foregoing embodiment, in the monostatic mode, the sensing transmitter may transmit the sensing reference signal, receive the sensing reference signal, and perform measurement on the sensing reference signal.

In combination with some embodiments of the first aspect, in some embodiments, the method includes transmitting the configuration information to a sensing receiver.

In the foregoing embodiment, the configuration information is transmitted to the sensing receiver, so that the sensing receiver determines the N bursts based on the configuration information, to receive the sensing reference signal based on the N bursts.

In combination with some embodiments of the first aspect, in some embodiments, the configuration information includes at least one of: a quantity N of the bursts; a first set corresponding to at least one burst; a second set corresponding to at least one burst; a parameter used to determine the first set corresponding to at least one burst; or, a parameter used to determine the second set corresponding to at least one burst; where the first set is used to indicate resource units occupied by a burst in the time domain, the second set is used to indicate resource units occupied by a burst in the frequency domain, the first set includes numbers for OFDM symbols occupied by a burst, and the second set includes numbers for OFDM subcarriers occupied by a burst.

In the foregoing embodiment, the first set corresponding to the at least one burst of the N bursts may be directly configured, or the first set may be indirectly configured by configuring the parameter used to determine the first set corresponding to the at least one burst of the N bursts, thus reducing the information that needs to be configured. Similarly, the second set corresponding to the at least one burst of the N bursts may be directly configured, or the second set may be indirectly configured by configuring the parameter used to determine the second set corresponding to the at least one burst of the N bursts, thus reducing the information that needs to be configured.

In combination with some embodiments of the first aspect, in some embodiments, the parameter used to determine the first set includes at least one of: a start OFDM symbol number for a burst; a start slot number for a burst; a start OFDM symbol number for a burst within a start slot; a symbol interval between OFDM symbols occupied by a burst; an OFDM symbol number set for a burst within a start slot; or, a total quantity of OFDM symbols occupied by a burst.

In the foregoing embodiment, the first set may be determined by configuring at least one parameter described above.

In combination with some embodiments of the first aspect, in some embodiments, the parameter used to determine the second set includes at least one of: a start OFDM subcarrier number for a burst; a start PRB number for a burst; a start OFDM subcarrier number for a burst within a start PRB; a total quantity of OFDM subcarriers occupied by a burst; a frequency domain interval between OFDM subcarriers occupied by a burst; or, a frequency domain density of a burst.

In the foregoing embodiment, the second set may be determined by configuring at least one parameter described above.

According to a second aspect, in an embodiment of the present disclosure, there is provided a sensing method. The method includes: receiving a sensing reference signal based on N bursts, where the sensing reference signal is a reference signal used for sensing, a burst represents resource units occupied by the sensing reference signal in the time domain and/or the frequency domain, and N is an integer greater than or equal to 2; and, performing measurement on the sensing reference signal.

In the foregoing embodiment, the sensing reference signal is received based on the N bursts, and measurement is performed on the sensing reference signal. In combination with the measurement results of the sensing reference signal within different bursts, an accurate sensing quantity estimation may be obtained, thus realizing wireless sensing.

In combination with some embodiments of the second aspect, in some embodiments, bandwidths occupied by the N bursts in the frequency domain are different from each other, and/or frequency domain intervals between OFDM subcarriers occupied by the N bursts in the frequency domain are different from each other.

In combination with some embodiments of the second aspect, in some embodiments, based on the time domain in which each burst is located, a bandwidth occupied by a later burst is greater than a bandwidth occupied by an earlier burst, and a frequency domain interval between OFDM subcarriers occupied by the later burst is greater than a frequency domain interval between OFDM subcarriers occupied by the earlier burst; or, based on the time domain in which each burst is located, the bandwidth occupied by the later burst is less than the bandwidth occupied by the earlier burst, and the frequency domain interval between OFDM subcarriers occupied by the later burst is less than the frequency domain interval between OFDM subcarriers occupied by the earlier burst; or, based on the time domain in which each burst is located, the bandwidth occupied by the later burst is greater than or less than the bandwidth occupied by the earlier burst, and the quantities of OFDM subcarriers occupied by the N bursts are the same; or, based on the time domain in which each burst is located, the frequency domain interval between OFDM subcarriers occupied by the later burst is greater than or less than the frequency domain interval between OFDM subcarriers occupied by the earlier burst, and the quantities of OFDM subcarriers occupied by the N bursts are the same.

In combination with some embodiments of the second aspect, in some embodiments, patterns of OFDM symbols occupied by the N bursts in the time domain are the same.

In combination with some embodiments of the second aspect, in some embodiments, resource units occupied by a burst in the time domain are indicated by a first set, and/or resource units occupied by a burst in the frequency domain are indicated by a second set, where the first set includes numbers for OFDM symbols occupied by a burst, and the second set includes numbers for OFDM subcarriers occupied by a burst.

In combination with some embodiments of the second aspect, in some embodiments, the method includes: obtaining configuration information, and determining the N bursts based on the configuration information.

In combination with some embodiments of the second aspect, in some embodiments, the configuration information includes at least one of: a quantity N of the bursts; a first set corresponding to at least one burst; a second set corresponding to at least one burst; a parameter used to determine the first set corresponding to at least one burst; or, a parameter used to determine the second set corresponding to at least one burst; where the first set is used to indicate resource units occupied by a burst in the time domain, the second set is used to indicate resource units occupied by a burst in the frequency domain, the first set includes numbers for OFDM symbol occupied by a burst, and the second set includes numbers for OFDM subcarriers occupied by a burst.

In combination with some embodiments of the second aspect, in some embodiments, the parameter used to determine the first set includes at least one of: a start OFDM symbol number for a burst; a start slot number for a burst; a start OFDM symbol number for a burst within a start slot; a symbol interval between OFDM symbols occupied by a burst; an OFDM symbol number set for a burst within a start slot; or, a total quantity of OFDM symbols occupied by a burst.

In combination with some embodiments of the second aspect, in some embodiments, the parameter used to determine the second set includes at least one of: a start OFDM subcarrier number for a burst; a start PRB number for a burst; a start OFDM subcarrier number for a burst within a start PRB; a total quantity of OFDM subcarriers occupied by a burst; a frequency domain interval between OFDM subcarriers occupied by a burst; or, a frequency domain density of a burst.

According to a third aspect, in an embodiment of the present disclosure, there is provided a sensing transmitter, including: a transceiver module, configured to transmit a sensing reference signal based on N bursts, where the sensing reference signal is a reference signal used for sensing, a burst represents resource units occupied by the sensing reference signal in the time domain and/or the frequency domain, and N is an integer greater than or equal to 2.

According to a fourth aspect, in an embodiment of the present disclosure, there is provided a sensing receiver, including: a transceiver module, configured to receive a sensing reference signal based on N bursts, where the sensing reference signal is a reference signal used for sensing, a burst represents resource units occupied by the sensing reference signal in the time domain and/or the frequency domain, and N is an integer greater than or equal to 2; and, a processing module, configured to perform measurement on the sensing reference signal.

According to a fifth aspect, in an embodiment of the present disclosure, there is provided a sensing transmitter including one or more processors, where the sensing transmitter is configured to perform the method described in the first aspect or the optional implementations of the first aspect.

According to a sixth aspect, in an embodiment of the present disclosure, there is provided a sensing receiver including one or more processors, where the sensing receiver is configured to perform the method described in the second aspect or the optional implementations of the second aspect.

According to a seventh aspect, in an embodiment of the present disclosure, there is provided a sensing system including at least one of a sensing transmitter or a sensing receiver, where the sensing transmitter is configured to implement the method described in the first aspect or the optional implementation of the first aspect, and the sensing receiver is configured to implement the method described in the second aspect or the optional implementation of the second aspect.

According to an eighth aspect, in an embodiment of the present disclosure, there is provided a sensing method, including: transmitting, by a sensing transmitter, a sensing reference signal based on N bursts, where the sensing reference signal is a reference signal used for sensing, a burst represents resource units occupied by the sensing reference signal in the time domain and/or the frequency domain, and N is an integer greater than or equal to 2; and receiving, by a sensing receiver, the sensing reference signal based on the N bursts, and performing measurement on the sensing reference signal.

In combination with some embodiments of the eighth aspect, in some embodiments, bandwidths occupied by the N bursts in the frequency domain are different from each other, and/or frequency domain intervals between OFDM subcarriers occupied by the N bursts in the frequency domain are different from each other.

In combination with some embodiments of the eighth aspect, in some embodiments, based on the time domain in which each burst is located, a bandwidth occupied by a later burst is greater than a bandwidth occupied by an earlier burst, and a frequency domain interval between OFDM subcarriers occupied by the later burst is greater than a frequency domain interval between OFDM subcarriers occupied by the earlier burst; or, based on the time domain in which each burst is located, the bandwidth occupied by the later burst is less than the bandwidth occupied by the earlier burst, and the frequency domain interval between OFDM subcarriers occupied by the later burst is less than the frequency domain interval between OFDM subcarriers occupied by the earlier burst; or, based on the time domain in which each burst is located, the bandwidth occupied by the later burst is greater than or less than the bandwidth occupied by the earlier burst, and the quantities of OFDM subcarriers occupied by the N bursts are the same; or, based on the time domain in which each burst is located, the frequency domain interval between OFDM subcarriers occupied by the later burst is greater than or less than the frequency domain interval between OFDM subcarriers occupied by the earlier burst, and the quantities of OFDM subcarriers occupied by the N bursts are the same.

In combination with some embodiments of the eighth aspect, in some embodiments, resource units occupied by a burst in the time domain are indicated by a first set, and/or resource units occupied by a burst in the frequency domain are indicated by a second set, where the first set includes numbers for OFDM symbols occupied by a burst, and the second set includes numbers for OFDM subcarriers occupied by a burst.

According to a ninth aspect, in an embodiment of the present disclosure, there is provided a storage medium, where the storage medium stores an instruction, and when the instruction runs on an electronic device, the electronic device is caused to perform the method described in the first aspect or the optional implementations of the first aspect, or to perform the method described in the second aspect or the optional implementations of the second aspect.

It may be understood that the sensing transmitter, the sensing receiver, the sensing system, and the storage medium are all configured to perform the method provided in the embodiments of the present disclosure. Therefore, for the beneficial effects that can be achieved by them, reference may be made to beneficial effects in the corresponding method, and details are not described here again.

Embodiments of the present disclosure propose a sensing method, a sensing transmitter, a sensing receiver, a sensing system, and a medium. In some embodiments, terms such as a sensing method, a signal transceiving method, a communication method, or the like may be replaced with each other. Terms such as a sensing transmitter, a first device, a transmitter, a wireless transmitter, an integrated sensing and communication transmitter, or the like may be replaced with each other. A sensing receiver, a second device, a receiver, a wireless receiver, and an integrated sensing and communication receiver may be replaced with each other. A sensing system, a communication system, and a sensing and communication system may be replaced with each other.

The embodiments of the present disclosure are not exhaustive, and are merely illustrative of some embodiments and are not intended to limit the scope of protection of the present disclosure. In the case of no contradiction, each step in an embodiment may be implemented as an independent embodiment, and the steps may be arbitrarily combined. For example, the solution after the partial step is removed in an embodiment may also be implemented as an independent embodiment, and the order of the steps in an embodiment may be exchanged arbitrarily. In addition, optional implementations in an embodiment may be arbitrarily combined with each other. In addition, the embodiments may be arbitrarily combined with each other. For example, some or all of the steps of different embodiments may be arbitrarily combined with each other, and an embodiment may be arbitrarily combined with optional implementations of other embodiments.

In the embodiments of the present disclosure, if there is no special description and a logical conflict, terms and/or descriptions between the embodiments have consistency, and may be referred to each other, and the technical features in different embodiments may be combined according to an internal logical relationship thereof to form a new embodiment.

Terms used in the embodiments of the present disclosure are only for the purpose of describing specific embodiments, and are not intended to limit the present disclosure.

In the embodiments of the present disclosure, unless otherwise specified, elements represented in the singular form, such as "a", "an", "the", "the foregoing", "said", "the above-mentioned", "such a", or the like, may mean "one and only one", or may mean "one or more", "at least one", or the like. For example, where articles such as "a", "an", "the" or the like in English are used in the translation, the noun after the article may be understood as a singular expression form, or may be understood as a plural expression form.

In the embodiments of the present disclosure, "a plurality of" means two or more.

In some embodiments, terms such as "at least one of", "one or more", "a plurality of", "multiple", or the like may be replaced with each other.

In some embodiments, recording manners such as "at least one of A or B", "A and/or B", "in one case A, in another case B", "in response to case A, in response to another case B" may include the following technical solutions according to situations: in some embodiments, A is performed (independently of B); in some embodiments, B is performed (independently of A); in some embodiments, it is selected from A and B for execution (A or B is selectively performed); in some embodiments A and B are performed (both A and B are performed). When there are more branches, such as A, B and C, it is also similar with the above description.

In some embodiments, recording manners such as "A or B" or the like may include the following technical solutions according to situations: in some embodiments, A is performed (independently of B); in some embodiments, B is performed (independently of A); in some embodiments, it is selected from A and B for execution (A or B is selectively performed). When there are more branches, such as A, B and C, it is also similar with the above description.

Prefixes such as "first" and "second" in the embodiments of the present disclosure are merely intended to distinguish different described objects, and do not constitute a limitation on the position, order, priority, quantity, or content of the described object. For the statement of the described object, reference of may be made to the description of the claims or the context in the embodiments. Usage of the prefixes should not constitute a redundant limitation. For example, if the described object is a "field", the ordinal terms before the "field" in the "first field" and the "second field" do not limit the position or sequence between the "fields"; "first" and "second" do not limit whether the described "fields" are in the same message, nor do they limit the order of "the first field" and the "second field". For another example, if the described object is a "level", the ordinal terms before the "level" in the "first level" and the "second level" do not limit the priority between the "levels". For another example, the quantity of the described object is not limited by the ordinal term, it may be one or more. Taking "a first apparatus" as an example, the quantity of the "apparatus" may be one or more. In addition, the objects described by using different prefixes may be the same or different. For example, if the described object is an " apparatus", "first apparatus" and "second apparatus" may be the same apparatus or different apparatuses, and the types of them may be the same or different. For another example, if the described object is "information", "first information" and "second information" may be the same information or different information, and the contents of them may be the same or different.

In some embodiments, "including A", comprising A", "indicating A" and "carrying A" may be interpreted as directly carrying A, or may be interpreted as indirectly indicating A.

In some embodiments, terms such as "in response to...", "in response to determining...","in a case of...","at the time...". "When...", "if...", "in case", or the like may be replaced with each other.

In some embodiments, terms such as "greater than", "greater than or equal to", "not smaller than", "more than", " more than or equal to", "no less than", "higher than", "higher than or equal to", "not lower than", "above", or the like may be replaced with each other. Terms such as "smaller than", "smaller than or equal to", "not greater than", "less than", "less than or equal to", "no more than", "lower", "lower than or equal to", "not higher than", "below", or the like may be replaced with each other.

In some embodiments, apparatuses and devices may be interpreted as entities or as virtual, and their names are not limited to the names described in the embodiments. In some cases, the apparatus or the device may also be understood as "equipment", "device", "circuit", "network element", "node", "function", "unit", "section", "system", "network", "chip", "chip system", "entity", "main body", etc.

In some embodiments, "network" may be interpreted as an apparatus included in a network, for example, an access network device, a core network device, or the like.

In some embodiments, an "access network device (AN device)" may also be referred to as a "radio access network device (RAN device)", a "base station (BS)", a "radio base station", or a "fixed station". In some embodiments, it may also be understood as a "node", an "access point", a "transmission point (TP)", a "reception point (RP)", a "transmission/reception point (TRP)", a "panel", an "antenna panel", an "antenna array", a "cell", a "macro cell", a "small cell", a "femto cell", a "pico cell", a "sector", a "cell group", a "serving cell", a "carrier", a "component carrier", a "bandwidth part (BWP)", etc.

In some embodiments, a "terminal" or a "terminal device" may be referred to as "user equipment (UE)," a "user terminal", a "mobile station (MS)", a "mobile terminal (MT)", a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, etc.

In some embodiments, acquiring data or information, etc. may conform to legal regulations in the country of the locus.

In some embodiments, data or information, etc. may be acquired after user consent is obtained.

In addition, each element, each row, or each column in the table of the embodiments of the present disclosure, may be implemented as an independent embodiment. The combination of any element, any row, or any column may also be implemented as an independent embodiment.

Wireless communication and wireless sensing have a high degree of similarity. In integrated sensing and communication (ISAC), wireless communication and wireless sensing may be combined together, and intimate cooperation may be introduced between wireless communication and wireless sensing, so that both wireless communication and wireless sensing can benefit, which can not only improve the effectiveness and reliability of wireless communication, but also improve the accuracy of wireless sensing. Moreover, the network deployment cost may be may be reduced due to the device that supports both wireless communication and wireless sensing.

In wireless sensing, it is usually necessary to estimate a distance, an orientation angle (for example, an angle in a horizontal direction or an angle in a vertical direction) and a velocity of a sensing target. The generalized sensing further includes performing wireless tracking and radio frequency identification on the sensing target. In order to realize high-accuracy sensing, a sensing transmitter usually transmits a dedicated reference signal used for sensing, which is hereinafter referred to as a sensing reference signal for ease of description. Optionally, the sensing reference signal may not carry information or data for communication.

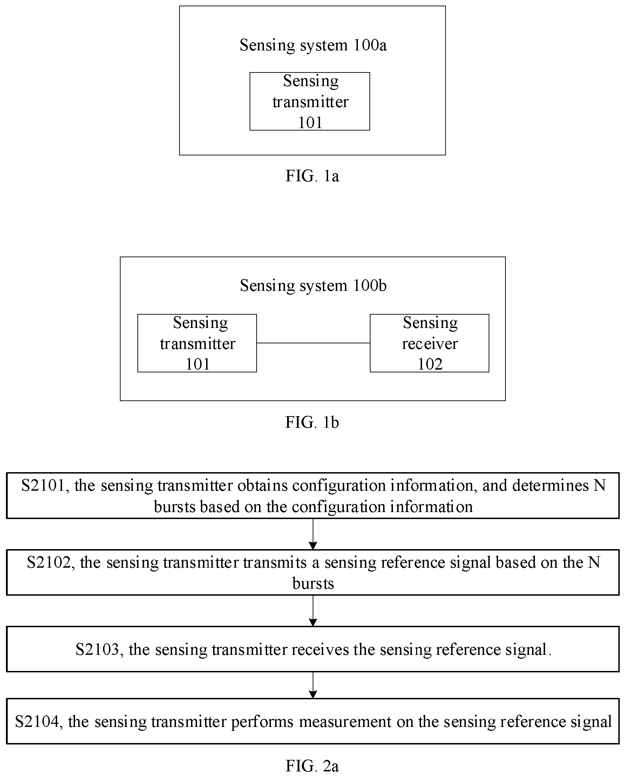

FIG. 1a is a schematic diagram of a sensing system according to an embodiment of the present disclosure. As shown in FIG. 1, the sensing system 100a may include a sensing transmitter 101, where the sensing transmitter 101 may transmit a sensing reference signal and perform measurement on an echo of the sensing reference signal, so as to estimate at least one of a distance, an angle, or a speed of the sensing target. The sensing system 100a corresponds to a monostatic mode. It will be appreciated that in the monostatic mode, the sensing transmitter 101 may also be referred to as a sensing receiver.

FIG. 1b is a schematic diagram of a sensing system according to an embodiment of the present disclosure. As shown in FIG. 1b, the sensing system 100b may include a sensing transmitter 101 and a sensing receiver 102, where the sensing transmitter 101 may transmit a sensing reference signal, the sensing receiver 102 may receive the sensing reference signal and perform measurement on the sensing reference signal, so as to estimate at least one of a distance, an angle, or a speed of the sensing target. The sensing system 100b corresponds to a bistatic mode.

As shown in FIG. 1a to FIG. 1b, in the embodiments of the present disclosure, the sensing system includes at least one of a sensing transmitter or a sensing receiver.

It should be noted that the quantity of the sensing transmitter and the quantity of the sensing receiver shown in FIG. 1a and FIG. 1b are merely examples, and do not constitute a limitation on the embodiments of the present disclosure. In an actual situation, there may be one or more sensing transmitters, and there may be one or more sensing receivers.

It may be understood that the sensing system in the embodiments of the present disclosure may correspond to a plurality of sensing scenarios. For example, the sensing system may be used for sensing between a terminal and a terminal, or for sensing between a terminal and a network device, or for sensing between a network device and a network device, or the like.

In some embodiments, the sensing transmitter may be located in a terminal or a network device.

In some embodiments, the sensing receiver may be located in a terminal or a network device.

Optionally, the sensing transmitter and the sensing receiver may be located in a network device.

Optionally, the sensing transmitter may be located in a network device, and the sensing receiver may be located in a terminal.

Optionally, the sensing transmitter may be located in a terminal, and the sensing receiver may be located in a network device.

Optionally, the sensing transmitter and the sensing receiver may be located in a terminal.

In some embodiments, the terminal may include at least one of a mobile phone, a wearable device, an Internet of Things device, an automobile having a communication function, an intelligent automobile, a tablet computer (Pad), a computer with a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, or a wireless terminal device in smart home, but is not limited to the above.

In some embodiments, the network device is, for example, an access network device. The access network device may include at least one of an evolved NodeB (eNB) in a 5G communication system, a next generation eNB (ng-eNB), a next generation NodeB (gNB), a NodeB (NB), a home NodeB (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an Open RAN, a Cloud RAN, a base station in another communication system, or an access node in a Wi-Fi system, but is not limited to the above.

Based on the sensing system shown in FIG. 1a to FIG. 1b, taking distance estimation of the sensing target as an example, the sensing receiver needs to accurately estimate the first echo path (in the monostatic sensing mode) reflected by the sensing target, or the arrival moment of the first path (in the bistatic sensing mode) scattered by the sensing target. In order to improve the estimation accuracy, the wireless sensing system needs to have a higher time domain resolution, and the time domain resolution depends on the bandwidth. In other words, the sensing reference signal needs to have a larger bandwidth, which is very necessary for high accuracy distance sensing. On the other hand, if the frequency domain density of the sensing reference signal is too low, that is, the frequency domain interval between adjacent subcarriers of the sensing reference signal is too large, frequency domain under-sampling may be caused, leading to that the sensing receiver observes mirroring of a plurality of channel impulse responses (CIR), and resulting in timing ambiguity and a large sensing error.

In the related art, the most simple and intuitive way is that the sensing reference signal adopts a uniform comb pattern in the frequency domain. For example, as one of the sensing applications, positioning reference signals used for positioning are uniformly distributed at equal intervals in the frequency domain. In view of this, the sensing reference signal tends to also adopt a comb pattern uniformly distributed in the frequency domain. In order to completely avoid timing ambiguity caused by frequency domain under-sampling, and achieve a higher time domain resolution, the sensing reference signal must simultaneously satisfy the conditions of high density in the frequency domain and large bandwidth.

However, if the sensing reference signal simultaneously satisfy the conditions of high density in the frequency domain and large bandwidth, two problems may be brought: first, the overhead of the sensing reference signal is too large, and too many frequency domain resources are occupied, resulting in a low frequency utilization rate of the sensing system.

Second, when the total transmit power of the sensing transmitter is constant (the actual situation is often the case), especially for the case that the terminal serves as a sensing transmitter, high density in the frequency domain and large bandwidth of the sensing reference signal may cause the power on each resource element (RE) of the sensing reference signal to be too low, that is, the EPRE (energy per resource element) is too low. This will inevitably reduce the sensing accuracy and performance.

FIG. 2a is a flowchart of a sensing method according to an embodiment of the present disclosure. As shown in FIG. 2a, the embodiment of the present disclosure relates to a sensing transmitter in the sensing system shown in FIG. 1a. Optionally, in the monostatic mode, the sensing transmitter may also be referred to as a sensing receiver. The sensing method includes following steps.

In step S2101, the sensing transmitter obtains configuration information, and determines N bursts based on the configuration information.

In some embodiments, "obtaining", "acquiring", "getting", "receiving", "transmitting", "bidirectional transmission", "transmitting and/or receiving" may be replaced with each other, and they may be interpreted as various meanings such as receiving from other entities, obtaining from a protocol, obtaining from a higher layer, obtaining by processing itself, and implementing autonomously.

In some embodiments, N is an integer greater than or equal to 2, that is, two or more bursts are determined in the above step.

In some embodiments, a burst may represent resource units occupied by a sensing reference signal in the time domain and/or the frequency domain. For example, a burst may represent OFDM symbols occupied by the sensing reference signal in the time domain, and OFDM subcarriers occupied in the frequency domain.

In some embodiments, a burst may represent a two-dimensional pattern of the sensing reference signal on the time-frequency resource grid, that is, a set of resource particles where the sensing reference signal is located.

In some embodiments, the resource units occupied by a burst in the time domain may be indicated by a first set. For example, the first set includes the numbers for OFDM symbols occupied by the burst. Optionally, the first set may also be referred to as a symbol number set.

In some embodiments, the resource units occupied by a burst in the frequency domain may be indicated by a second set. For example, the second set includes the numbers for OFDM subcarriers occupied by the burst. Optionally, the second set may also be referred to as a subcarrier number set.

In the foregoing embodiment, the set of resource particles where the sensing reference signal within each burst is located may be obtained through the numbers for OFDM symbols in the first set and/or the numbers for OFDM subcarriers in the second set.

For ease of description, it is assumed that the n-th burst occupies $L_n$ OFDM symbols in the time domain, and occupies $K_n$ OFDM subcarriers in the frequency domain, and the first set is represented as $L_n = \{\ell_{n,1}, \ell_{n,2}, ..., \ell_{n,L_n}\}$, the second set is represented as $\mathcal{K}_n = \{k_{n,1}, k_{n,2}, ..., k_{n,K_n}\}$, where $n$ = 1, ..., N.

In the first set, each element in the set may represent an OFDM symbol number. For example, $\ell_{n,L_n}$ represents the number for the $L_n$-th OFDM symbol occupied by the n-th burst.

In the second set, each element in the set may represent an OFDM subcarrier number. For example, $k_{n,K_n}$ represents the number for the $K_n$-th OFDM subcarrier occupied by the $n$-th burst.

In some embodiments, different bursts may have the same time domain pattern, for example, the patterns of OFDM symbols occupied by the N bursts in the time domain may be the same.

For example, for any two bursts of a burst $n_1$ and a burst $n_2$ ($n_1 \neq n_2$), the total quantity of OFDM symbols occupied by the burst $n_1$ in the time domain is the same as the total quantity of OFDM symbols occupied by the burst $n_2$ in the time domain, i.e., $L_{n_1} = L_{n_2}$. In addition, for any $i, j = 1, 2, ..., L_{n_1} (= L_{n_2})$, $i \neq j$, the symbol interval between the $i$-th OFDM symbol and the $j$-th OFDM symbol occupied by the burst $n_1$ is the same as the symbol interval between the i-th OFDM symbol and the $j$-th OFDM symbol occupied by the burst $n_2$, i.e., $\ell_{n_1,}i - \ell_{n_1,}j = \ell_{n_2,}i - \ell_{n_2,}j$.

In the foregoing embodiment, since the N bursts have the same time domain pattern, the configuration of the N bursts may be caused to be simpler.

In some embodiments, the patterns of OFDM symbols occupied by the N bursts in the time domain may be different from each other.

In some embodiments, the quantities of OFDM subcarriers occupied by the N bursts in the frequency domain may be the same.

For example, for any two bursts of a burst $n_1$ and a burst $n_2$ ($n_1 \neq n_2$), the total quantity of OFDM subcarriers occupied by the burst $n_1$ in the frequency domain is the same as the total quantity of OFDM subcarriers occupied by the burst $n_2$ in the frequency domain, i.e., $K_{n_1} = K_{n_2}$.

In the foregoing embodiment, since the quantities of OFDM subcarriers occupied by the N bursts are the same, the configuration of the N bursts may be caused to be simpler, and it is easy to control the bandwidths of the N bursts and/or the frequency domain intervals between OFDM subcarriers.

In some embodiments, the quantities of OFDM subcarriers occupied by the N bursts in the frequency domain may be different from each other.

In some embodiments, the bandwidths occupied by the N bursts in the frequency domain may be different from each other. It should be noted that the bandwidth occupied by each burst may be defined as the bandwidth from the start OFDM subcarrier to the end OFDM subcarrier occupied by the burst. For example, it is assumed that $B_n$ represents the bandwidth occupied by the $n$-th burst, and for any $p, q$ = 1,2, ..., $K_n$, $p \neq q$, there is

$$B_n \triangleq \max_{p,q=1,2,...,K_n; p \neq q} |k_{n,p} - k_{n,q}| .$$

Among them, $|k_{n,p} - k_{n,q}|$ represents the bandwidth from the $p$-th OFDM subcarrier to the $q$-th OFDM subcarrier occupied by the $n$-th burst.

In the foregoing embodiment, since the bandwidths occupied by the N bursts in the frequency domain are different from each other, the bandwidths of the sensing reference signal within each burst are different from each other. Therefore, by combining the measurement results of the sensing reference signal within different bursts, a high-accuracy sensing quantity estimation may be obtained.

Optionally, the bandwidths occupied by the N bursts in the frequency domain may be increasingly greater. That is, for any two bursts, based on the time domain in which each burst is located, the bandwidth occupied by the later burst is greater than the bandwidth occupied by the earlier burst.

For example, for any two bursts of a burst $n_1$ and a burst $n_2$ ($n_1 \neq n_2$), based on the time domain where the burst $n_1$ is located and the time domain where the burst $n_2$ is located, it may be known that the burst $n_2$ is later in time, and the bandwidth occupied by the burst $n_2$ is greater than the bandwidth occupied by the burst $n_1$, that is, $B_{n_1} < B_{n_2}$.

Optionally, the bandwidths occupied by the N bursts in the frequency domain may be increasingly smaller. That is, for any two bursts, based on the time domain in which each burst is located, the bandwidth occupied by the later burst is less than the bandwidth occupied by the earlier burst.

In the foregoing embodiment, the bandwidths occupied by the N bursts in the frequency domain are gradually changed. For example, the bandwidths are increased in sequence, which is beneficial to gradually increasing the sensing accuracy of the sensing quantity or gradually reducing the estimation range of the sensing quantity when performing measurement on the sensing reference signal within each burst.

In some embodiments, frequency domain intervals between OFDM subcarriers occupied by the N bursts in frequency domain are different from each other.

It may be understood that the frequency domain interval between the OFDM subcarriers occupied by the burst in the frequency domain is associated with the frequency domain density of the burst. Optionally, the frequency domain density may indicate a quantity of OFDM subcarriers occupied within one PRB. For example, if the frequency domain density of the burst $\rho=3$, it indicates that the burst occupies 3 subcarriers within each PRB. For another example, if the frequency domain density of the burst $\rho=1/2$, it indicates that the burst occupies one subcarrier within every two PRBs.

It may be understood that the frequency domain interval between the OFDM subcarriers occupied by the burst in the frequency domain is opposite to the size of the frequency domain density of the burst. The greater the frequency domain interval between the OFDM subcarriers occupied by the burst in the frequency domain, the smaller the frequency domain density of the burst; otherwise, the smaller the frequency domain interval, the greater the frequency domain density.

In the foregoing embodiment, the frequency domain intervals between the OFDM subcarriers occupied by the N bursts in the frequency domain are different from each other, that is, the frequency domain densities of the sensing reference signal within each burst are different from each other. Therefore, by combining the measurement results of the sensing reference signal within different bursts, the problem of frequency domain under-sampling and ambiguity in the sensing quantity may be avoided.

Optionally, the frequency domain intervals between the OFDM subcarriers occupied by the N bursts in the frequency domain may be increasingly greater. That is, for any two bursts, based on the time domain in which each burst is located, the frequency domain interval between the OFDM subcarriers occupied by the later burst is greater than the frequency domain interval between the OFDM subcarriers occupied by the earlier burst.

Based on this, the frequency domain densities of the N bursts are increasingly smaller. That is, the frequency domain density of the later burst is less than the frequency domain density of the earlier burst.

Optionally, the frequency domain intervals between the OFDM subcarriers occupied by the N bursts in the frequency domain may be increasingly smaller. That is, for any two bursts, based on the time domain in which each burst is located, the frequency domain interval between the OFDM subcarriers occupied by the later burst is less than the frequency domain interval between the OFDM subcarriers occupied by the earlier burst.

Based on this, the frequency domain densities of the N bursts are increasingly greater. That is, the frequency domain density of the later burst is greater than the frequency domain density of the earlier burst.

In the foregoing embodiment, the frequency domain intervals between the OFDM subcarriers occupied by the N bursts in the frequency domain are gradually changed. That is, the frequency domain densities of the N bursts are gradually changed, which is beneficial to gradually increasing the sensing accuracy of the sensing quantity or gradually reducing the estimation range of the sensing quantity when performing measurement on the sensing reference signal within each burst.

In some embodiments, for the frequency domain intervals between the OFDM subcarriers and the bandwidths occupied by the N bursts in the frequency domain, any one of the following cases may be satisfied. Case (1): based on the time domain in which each burst is located, the bandwidth occupied by the later burst is greater than the bandwidth occupied by the earlier burst, and the frequency domain interval between the OFDM subcarriers occupied by the later burst is greater than the frequency domain interval between the OFDM subcarriers occupied by the earlier burst.

In case (1), bandwidths occupied by the N bursts are increased in sequence, and frequency domain intervals between OFDM subcarriers occupied by the N bursts are also increased in sequence, that is, frequency domain densities of the N bursts are decreased in sequence.

Case (2): based on the time domain in which each burst is located, the bandwidth occupied by the later burst is less than the bandwidth occupied by the earlier burst, and the frequency domain interval between the OFDM subcarriers occupied by the later burst is less than the frequency domain interval between the OFDM subcarriers occupied by the earlier burst.

In case (2), bandwidths occupied by the N bursts are decreased in sequence, and frequency domain intervals between OFDM subcarriers occupied by the N bursts are also decreased in sequence, that is, frequency domain densities of the N bursts are increased in sequence.

Case (3): based on the time domain in which each burst is located, the bandwidth occupied by the later burst is greater than or less than the bandwidth occupied by the earlier burst, and the quantities of OFDM subcarriers occupied by the N bursts are the same.

In case (3), in some examples, bandwidths occupied by the N bursts are increased in sequence. Since the quantities of OFDM subcarriers occupied by the N bursts are the same, the frequency domain intervals between the OFDM subcarriers occupied by the N bursts also are increased in sequence, that is, the frequency domain densities of the N bursts are decreased in sequence. Alternatively, in some examples, bandwidths occupied by the N bursts are decreased in sequence. Since the quantities of OFDM subcarriers occupied by the N bursts are the same, the frequency domain intervals between the OFDM subcarriers occupied by the N bursts are also decreased in sequence, that is, the frequency domain densities of the N bursts are increased in sequence.

Case (4): based on the time domain in which each burst is located, the frequency domain interval between the OFDM subcarriers occupied by the later burst is greater than or less than the frequency domain interval between the OFDM subcarriers occupied by the earlier burst, and the quantities of OFDM subcarriers occupied by the N bursts are the same.

In case (4), in some examples, the frequency domain intervals between OFDM subcarriers occupied by the N bursts are increased in sequence, that is, the frequency domain densities of the N bursts are decreased in sequence. Since the quantities of OFDM subcarriers occupied by the N bursts are the same, the bandwidths occupied by the N bursts are increased in sequence. Alternatively, in some examples, the frequency domain intervals between OFDM subcarriers occupied by the N bursts are decreased in sequence, that is, the frequency domain densities of the N bursts are increased in sequence. Since the quantities of OFDM subcarriers occupied by the N bursts are the same, the bandwidths occupied by the N bursts are decreased in sequence.

Among them, in the foregoing case (3), the quantities of OFDM subcarriers occupied by the N bursts implicitly indicate frequency domain intervals between OFDM subcarriers occupied by the N bursts or frequency domain densities of the N bursts. In case (4), the quantities of OFDM subcarriers occupied by the N bursts implicitly indicate the bandwidths occupied by the N bursts.

According to the foregoing listed cases, taking two bursts as an example, in an embodiment, the first burst has a higher frequency domain density and a smaller bandwidth, and the second burst has a lower frequency domain density and a greater bandwidth. In yet another embodiment, the first burst has a lower frequency domain density and a greater bandwidth, and the second burst has a higher frequency domain density and a smaller bandwidth.

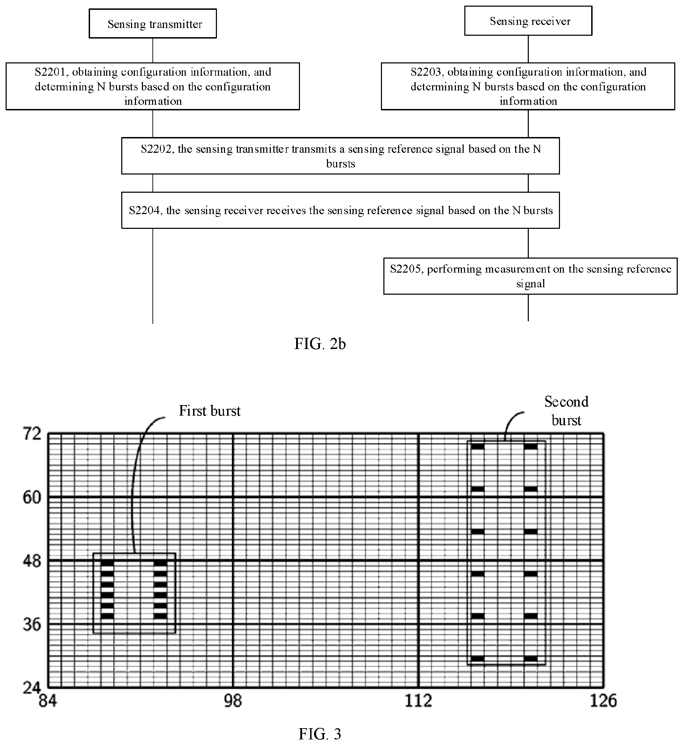

FIG. 3 is a schematic diagram of a time-frequency resource grid including two bursts according to an embodiment of the present disclosure. Referring to the time-frequency resource grid shown in FIG. 3, the first burst has a higher frequency domain density, but the bandwidth is smaller, which indicates that the first set of OFDM symbol numbers is $\mathcal{L}_1 =$ {88,92} and the second set of OFDM subcarrier numbers is $\mathcal{K}_1$ = {37,39,41,43,45,47}. The second burst has a lower frequency domain density, but the bandwidth is greater, which indicates that the first set of OFDM symbol numbers is $\mathcal{L}_2 =$ {116,120} and the second set of OFDM subcarrier numbers is $\mathcal{K}_2$ = {29,37,45,53,61,69}.

In some embodiments, the sensing transmitter determines the N bursts based on the obtained configuration information.

Optionally, the configuration information may include at least one of: a quantity N of the bursts; a first set corresponding to at least one burst; a second set corresponding to at least one burst; a parameter used to determine the first set corresponding to at least one burst; or a parameter used to determine the second set corresponding to at least one burst.

In the foregoing embodiment, the first set corresponding to the at least one burst of the N bursts may be directly configured, or the first set may be indirectly configured by configuring the parameter used to determine the first set corresponding to the at least one burst of the N bursts, to reduce the information that needs to be configured. Similarly, the second set corresponding to the at least one burst of the N bursts may be directly configured, or the second set may be indirectly configured by configuring the parameter used to determine the second set corresponding to the at least one burst of the N bursts, to reduce the information that needs to be configured.

In some embodiments, for a burst uniformly distributed in the time domain, for example, a burst $n$, the first set may be indirectly configured by configuring the parameter used to determine the first set corresponding to the burst n in the configuration information.

Optionally, the parameter used to determine the first set may include at least one of: (a) a start OFDM symbol number $\ell_{n,1}$ for the burst; (b) a start slot number $s_n$ for the burst; (c) a start OFDM symbol number $\ell'_{n,1}$ for the burst within a start slot; (d) a symbol interval $\Delta_n^{(t)}$ between OFDM symbols occupied by the burst; (e) an OFDM symbol number set $\ell'_n$ for the burst within a start slot (an OFDM symbol number set within a slot); or, (f) a total quantity $L_n$ of OFDM symbols occupied by the burst.

For example, $\ell'_n = \left\{ \ell'_{n,1}, \ell'_{n,2}, ..., \ell'_{n,L} \right\}$.

In some examples, the configuration information may include at least one of parameters (a), (d), or (f).

In some examples, the configuration information may include at least one of parameters (b), (c), (d), or (f).

In some examples, the configuration information may include at least one of parameters (b), (e), or (f).

In the foregoing embodiment, the relationship among the start OFDM symbol number $\ell_{n,1}$ for the burst, the start

slot number $s_n$ for the burst and the start OFDM symbol number $\ell'_{n,1}$ for the burst within the start slot may be expressed as follows:

$$\ell_{n,1} = s_n N_{\text{sym}}^{\text{slot}} + \ell'_{n,1}$$

where, $N_{\text{sym}}^{\text{slot}}$ is the quantity of OFDM symbols included in one slot.

In the foregoing embodiment, the first set may be determined by configuring at least one of parameters (a) ~(f).

Optionally, for an unconfigured parameter, a default value may be used.

Optionally, the default value of the total quantity $L_n$ of OFDM symbols may be set to 1.

Optionally, when $L_n > 1$, the OFDM symbols occupied by the burst in the time domain may be uniformly distributed based on the above symbol interval $\Delta_n^{(t)}$, i.e., $\Delta_n^{(t)} = \ell_{n,2} - \ell_{n,1} = \ell_{n,3} - \ell_{n,2} = \cdots = \ell_{n,L_n} - \ell_{n,L_n-1}$ .

Optionally, the symbol interval $\Delta_n^{(t)}$ may be represented as the quantity of OFDM symbols.

In some examples, it is taken as an example that the configuration information includes parameters (b), (e), and (f).

According to the foregoing optional implementation, patterns of OFDM symbols occupied by the N bursts may be the same. Based on this, different bursts have different start slot numbers, but have the same OFDM symbol number set within the slot. Therefore, the configuration information of the N bursts may include: the start slot numbers for the N bursts, $s = \{s_1, s_2, \ldots, s_N\}$; the OFDM symbol number sets for the bursts within the start slots (the OFDM symbol number sets within the slots), $\ell' = \{\ell'_1, \ell'_2, \ldots, \ell'_L\}$ ; and the total quantities of OFDM symbols occupied by the bursts, $L$.

In some embodiments, for a burst uniformly distributed in the frequency domain, for example, the burst $n$, the second set may be indirectly configured by configuring a parameter used to determine the second set corresponding to the burst n in the configuration information.

Optionally, the parameter used to determine the second set may include at least one of: (g) the start OFDM subcarrier number $k_{n,1}$ for the burst; (h) the start PRB number $p_n$ for the burst; (i) the start OFDM subcarrier number $k'_{n,1}$ for the burst within the start PRB; (j) the total quantity $K_n$ of OFDM subcarriers occupied by the burst; (k) the frequency domain interval $\Delta_n^{(f)}$ between OFDM subcarriers occupied by the burst; or, (1) the frequency domain density $\rho$ of the burst.

Optionally, in the configuration information, the foregoing parameters (k) and (1) may selectively be configured.

In some examples, the configuration information may include at least one of parameters (g), (j), or (k).

In some examples, the configuration information may include at least one of parameters (g), (j), or (1).

In some examples, the configuration information may include at least one of parameters (h), (i), (j), or (k).

In some examples, the configuration information may include at least one of parameters (h), (i), (j), or (1).

Optionally, the start PRB number $p_n$ is a number with respect to a common resource block (CRB).

In the foregoing embodiment, the relationship among the start OFDM subcarrier number $k_{n,1}$ for the burst, the start PRB number $p_n$ for the burst and the start OFDM subcarrier number $k'_{n,1}$ for the burst within the start PRB may be expressed as follows:

$$k_{n,1} = p_n N_{\text{subc}}^{\text{PRB}} + k'_{n,1}$$

where, $0 \le k'_{n,1} < N_{\text{subc}}^{\text{PRB}}$, and $N_{\text{subc}}^{\text{PRB}}$ is the quantity of OFDM subcarriers included in one PRB.

In the foregoing embodiment, the second set may be determined by configuring at least one of the parameters (g) ~(l).

Optionally, for an unconfigured parameter, a default value may be used.

Optionally, the default value of the total quantity $K_n$ of OFDM subcarriers may be set to 1.

Optionally, when $K_n > 1$, the OFDM subcarriers occupied by the burst in the frequency domain may be uniformly distributed based on the above frequency domain interval $\Delta_n^{(f)}$ , i.e.,

$$\Delta_n^{(f)} = k_{n,2} - k_{n,1} = k_{n,3} - k_{n,2} = \cdots = k_{n,K_n} - k_{n,K_n-1}.$$

Optionally, the frequency domain interval $\Delta_n^{(f)}$ may be represented as the quantity of OFDM subcarriers.

In some examples, it is taken as an example that the configuration information includes a parameter (g), (j), and (k/l).

Generally, the configuration information of the N bursts may include: the total quantities of OFDM subcarriers occupied by the N bursts, $K = \{K_1, K_2, ..., K_N\}$.

Optionally, according to the foregoing optional implementation, when the quantities of OFDM subcarriers occupied by the N bursts are the same, the list of total quantities of OFDM subcarriers becomes one numerical value.

Generally, the configuration information of the N bursts may include: the frequency domain densities of the N bursts, $\rho = \{\rho_1, \rho_2, ... , \rho_N\}$; or, the frequency domain intervals between OFDM subcarriers occupied by N bursts,

$$\Delta^{(f)} = \left\{\Delta_1^{(f)}, \Delta_2^{(f)}, ..., \Delta_N^{(f)}\right\}.$$

Generally, the configuration information of the N bursts may include: the start OFDM subcarrier numbers for the N bursts, $k_1 = \{k_{1,1}, k_{2,1}, ..., k_{N,1}\}$.

Optionally, when the start OFDM subcarrier numbers for the N bursts are the same, the list of start OFDM subcarrier numbers becomes one numerical value.

In some examples, taking that the configuration information includes the parameters (h), (i), (j), and (k/l) as an example, generally, the configuration information of the N bursts may include: the total quantities of OFDM subcarriers occupied by the N bursts, $K = \{K_1, K_2, ... , K_N\}$.

Optionally, according to the foregoing optional implementation, when the quantities of OFDM subcarriers occupied by the N bursts are the same, the list of total quantities of OFDM subcarriers becomes one numerical value.

Generally, the configuration information of the N bursts may include: the frequency domain densities of the N bursts, $\rho = \{\rho_1, \rho_2, ... , \rho_N\}$; or, the frequency domain intervals between OFDM subcarriers occupied by the N bursts,

$$\Delta^{(f)} = \left\{\Delta_1^{(f)}, \Delta_2^{(f)}, ..., \Delta_N^{(f)}\right\}.$$

Generally, the configuration information of the N bursts may include: start PRB numbers for the N bursts, $p = \{p_1, p_2, ..., p_N\}$.

Optionally, when the start PRB numbers for the N bursts are the same, the list of start PRB numbers becomes one numerical value.

Generally, the configuration information of the N bursts may include: the start OFDM subcarrier numbers for the N bursts within the start PRBs, $k_1' = \left\{k_{1,1}', k_{2,1}', ..., k_{N,1}'\right\}$.

Optionally, when the start OFDM subcarrier numbers for the N bursts within the start PRBs are the same, the list of start OFDM subcarrier numbers within the start PRBs becomes one numerical value.

With continued reference to the time-frequency resource grid shown in FIG. 3, it can be known that, for the first burst, the start slot number $s_1 = 6$, the start OFDM symbol number within the start slot $\ell_{1,1}' = 4$, the total quantity of occupied OFDM symbols $L_1 = 2$, the symbol interval between the occupied OFDM symbols $\Delta_1^{(t)} = 4$, the start PRB number $p_1 = 3$, the start OFDM subcarrier number within the start PRB $k_{1,1}' = 1$, the total quantity of occupied OFDM subcarriers $K_1 = 6$, and the frequency domain interval between occupied OFDM subcarriers $\Delta_1^{(f)} = 2$.

For the second burst, the start slot number $s_2 = 8$, the start OFDM symbol number within the start slot $\ell_{2,1}' = 4$, the total quantity of occupied OFDM symbols $L_2 = 2$, the symbol interval between the occupied OFDM symbols $\Delta_2^{(t)} = 4$, the start PRB number $p_2 = 2$, the start OFDM subcarrier number within the start PRB $k_{2,1}' = 5$, the total quantity of occupied OFDM subcarriers $K_2 = 6$, and the frequency domain interval between occupied OFDM subcarriers $\Delta_2^{(f)} = 8$.

In some embodiments, the sensing transmitter may obtain the configuration information from the core network. Optionally, the sensing transmitter may receive the configuration information transmitted by a core network element.

In some embodiments, the core network element may be a location management functionality (LMF) network element, or a network element specifically used for sensing, such as an SMF (sensing management function) network element.

In some embodiments, the sensing transmitter may obtain the configuration information from a sensing application.

It should be noted that the specific implementation of obtaining the configuration information by the sensing transmitter is not limited in the embodiments of the present disclosure.

In some embodiments, the sensing transmitter may determine the first set and the second set corresponding to each burst based on the configuration information, to determine the N bursts.

In step S2102, the sensing transmitter transmits a sensing reference signal based on the N bursts.

In some embodiments, the sensing transmitter transmits the sensing reference signal based on resource particles represented by the N bursts.

In some embodiments, the sensing reference signal within the N bursts may be referred to as a sensing reference signal series as a whole.

In some embodiments, terms such as a burst, an occasion and a pattern may be replaced with each other.

In some embodiments, the N bursts may be referred to as one occasion or one pattern as a whole.

In some embodiments, each burst may be referred to as one sub-occasion or one subpattern, respectively.

In some embodiments, each burst may be referred to as one occasion or one pattern, respectively.

In step S2103, the sensing transmitter receives the sensing reference signal.

In step S 2104, the sensing transmitter performs measurement on the sensing reference signal.

In some embodiments, the sensing transmitter obtains configuration information, determines N bursts based on the configuration information, transmits a sensing reference signal based on the N bursts, receives the sensing reference signal, and performs measurement on the sensing reference signal.

In the foregoing embodiment, by combining the measurement results of the sensing reference signal within different bursts, the sensing transmitter may obtain an accurate sensing quantity estimation, thus realizing wireless sensing.

Optionally, according to the foregoing optional implementation, the bandwidths occupied by the N bursts in the frequency domain and the frequency domain intervals between the occupied OFDM subcarriers are in the same progressive change, that is, the bandwidths of the N bursts and the frequency domain densities of the N bursts are in opposite progressive change. For example, the bandwidths are increased in sequence, and the frequency domain densities are decreased in sequence. Referring to the time-frequency resource grid shown in FIG. 3, taking a sensing distance as an example, for a burst with a higher frequency domain density but a smaller bandwidth, such as the first burst shown in FIG. 3, the sensing transmitter performs measurement on the sensing reference signal within the first burst, to obtain a rough (lower accuracy) estimation of the sensing quantity. Since the frequency domain density of the sensing reference signal within the burst is relatively higher, the problem of frequency domain under-sampling and ambiguity in sensing quantity is avoided.

For a burst with a lower frequency domain density but a greater bandwidth, such as the second burst shown in FIG. 3, the sensing transmitter performs measurement on the sensing reference signal within the second burst, to obtain one or more high-accuracy estimations of the sensing quantity. Among them, since the bandwidth of the sensing reference signal within the burst is relatively greater, the time domain resolution and the sensing accuracy are relatively higher. However, since the frequency domain density of the sensing reference signal within the burst is relatively lower, frequency domain under-sampling may occur, so that a plurality of estimations of the sensing quantity may be obtained, that is, the problem of ambiguity in sensing quantity may occur.

Therefore, since the occupied bandwidths of the N bursts and the frequency domain densities of the N bursts are in opposite progressive change, by performing measurement on the sensing reference signal within the N bursts and combining the measurement results of the sensing reference signal within different bursts, the sensing transmitter may obtain a high-accuracy and unique (non-ambiguous) estimation of the sensing quantity.

In the foregoing embodiment, the sensing process may be completed through a series of progressive iterations. For example, the sensing transmitter sequentially performs measurement on the sensing reference signal within each burst, thus gradually increasing the sensing accuracy of the sensing quantity or gradually reducing the estimation range of the sensing quantity.

Compared with a sensing reference signal scheme with a high frequency domain density and a small bandwidth, a higher sensing accuracy may be obtained in the embodiments of the present disclosure.

Compared with a sensing reference signal scheme with a low frequency domain density and a great bandwidth, the problem of ambiguity in sensing caused by frequency domain under-sampling may be completely avoided in the embodiments of the present disclosure.

Compared with a sensing reference signal scheme with a high frequency domain density and a great bandwidth, the same sensing performance, including sensing accuracy and sensing range, may be obtained in the embodiments of the present disclosure. Moreover, the resource overhead in the embodiments of the present disclosure is less, and the EPRE is higher, which is particularly important for power-limited devices (such as terminals).

The sensing method involved in the embodiments of the present disclosure may include at least one of step S2101 to step S2104. For example, step S2101 may be implemented as an independent embodiment, step S2102 may be implemented as an independent embodiment, and step S2101 plus step S2102 may be implemented as an independent embodiment, which is not limited to this.

In some embodiments, step S2102 to step S2104 are optional, and one or more of these steps may be omitted or replaced in different embodiments.

In some embodiments, step S2101, step S2103 to step S2104 are optional, and one or more of these steps may be omitted or replaced in different embodiments.

In some embodiments, step S2103 to step S2104 are optional, and one or more of these steps may be omitted or replaced in different embodiments.

FIG. 2b is a flowchart of a sensing method according to an embodiment of the present disclosure. As shown in FIG. 2b, the embodiment of the present disclosure relates to a sensing transmitter and a sensing receiver in the sensing system shown in FIG. 2b. The sensing method includes following steps.

In step S2201, the sensing transmitter obtains the configuration information, and determines the N bursts based on the configuration information.

For optional implementations of step S2201, reference may be made to the optional implementations of step S2101 of FIG. 2a and other associated parts in the embodiments involved in FIG. 2a, and details are not described here again.

In step S2202, the sensing transmitter transmits the sensing reference signal based on the N bursts.

For optional implementations of step S2202, reference may be made to the optional implementations of step S2102 of FIG. 2a and other associated parts in the embodiments involved in FIG. 2a, and details are not described here again.

In step S2203, the sensing receiver obtains the configuration information, and determines the N bursts based on the configuration information.

In some embodiments, "obtaining", "acquiring", "getting", "receiving", "transmitting", "bidirectional transmission", "transmitting and/or receiving" may be replaced with each other, and they may be interpreted as various meanings such as receiving from other entities, obtaining from a protocol, obtaining from a higher layer, obtaining by processing itself, and implementing autonomously.

In some embodiments, the sensing transmitter may transmit the configuration information to the sensing receiver. The sensing receiver receives the configuration information, and determines the N bursts based on the configuration information.

In some embodiments, the sensing receiver may obtain the configuration information from the core network. Optionally, the sensing receiver may receive the configuration information transmitted by a core network element, and determine the N bursts based on the configuration information.

In some embodiments, the core network element may be an LMF network element, or a network element specifically used for sensing, such as an SMF network element.

It should be noted that the specific implementation of obtaining the configuration information by the sensing receiver is not limited in the embodiments of the present disclosure.

In some embodiments, the sensing receiver may determine the first set and the second set corresponding to each burst based on the configuration information, to determine the N bursts.

In some embodiments, the optional implementation of determining the N bursts by the sensing receiver based on the configuration information is the same as the optional implementation of determining the N bursts by the sensing transmitter based on the configuration information.

Therefore, for the optional implementations of step S2203, reference may be made to the optional implementations of step S2101 of FIG. 2a and other associated parts in the embodiments involved in FIG. 2a, and details are not described here again.

In some embodiments, step S2203 and step S2202 may be performed in an exchanged order or simultaneously. Step S2203 and step S2201 may be performed in an exchanged order or simultaneously.

In step S2204, the sensing receiver receives the sensing reference signal based on the N bursts.

In some embodiments, the sensing receiver receives the sensing reference signal based on resource particles represented by the N bursts.

In step S2205, the sensing receiver performs measurement on the sensing reference signal.

In some embodiments, the sensing transmitter and the sensing receiver obtain the configuration information and determine the N bursts based on the configuration information; the sensing transmitter transmits a sensing reference signal based on the N bursts; and the sensing receiver receives the sensing reference signal based on the N bursts, and performs measurement on the sensing reference signal.

In the foregoing embodiment, in combination with the measurement results of the sensing reference signal within different bursts, the sensing receiver may obtain an accurate sensing quantity estimation, thus realizing wireless sensing.

Optionally, according to an optional implementation, the bandwidths occupied by the N bursts in the frequency domain and the frequency domain intervals between the occupied OFDM subcarriers are in the same progressive change, that is, the bandwidths of the N bursts and the frequency domain densities of the N bursts are in opposite progressive change. For example, the bandwidths are increased in sequence, and the frequency domain densities are decreased in sequence. Referring to the time-frequency resource grid shown in FIG. 3, taking a sensing distance as an example, for a burst with a higher frequency domain density but a smaller bandwidth, such as the first burst shown in FIG. 3, the sensing receiver performs measurement on the sensing reference signal within the first burst, to obtain a rough (lower accuracy) estimation of the sensing quantity. Since the frequency domain density of the sensing reference signal within the burst is relatively higher, the problem of frequency domain under-sampling and ambiguity in sensing quantity is avoided.

For a burst with a lower frequency domain density but a greater bandwidth, such as the second burst shown in FIG. 3, the sensing receiver performs measurement on the sensing reference signal within the second burst, to obtain one or more high-accuracy estimations of the sensing quantity. Among them, since the bandwidth of the sensing reference signal within the burst is relatively greater, the time domain resolution and the sensing accuracy are relatively higher. However, since the frequency domain density of the sensing reference signal within the burst is relatively lower, frequency domain under-sampling may occur, so that a plurality of estimations of the sensing quantity may be obtained, that is, the problem of ambiguity in sensing quantity may occur.

Therefore, since the occupied bandwidths of the N bursts and the frequency domain densities of the N bursts are in opposite progressive change, by performing measurement on the sensing reference signal within the N bursts and combining the measurement results of the sensing reference signal within different bursts, the sensing receiver may obtain a high-accuracy and unique (non-ambiguous) estimation of the sensing quantity.

In the foregoing embodiment, the sensing process may be completed through a series of progressive iterations. For example, the sensing receiver sequentially performs measurement on the sensing reference signal within each burst, thus gradually increasing the sensing accuracy of the sensing quantity or gradually reducing the estimation range of the sensing quantity.

Compared with a sensing reference signal scheme with a high frequency domain density and a small bandwidth, a higher sensing accuracy may be obtained in the embodiments of the present disclosure.

Compared with a sensing reference signal scheme with a low frequency domain density and a great bandwidth, the problem of ambiguity in sensing caused by frequency domain under-sampling may be completely avoided in the embodiments of the present disclosure.

Compared with a sensing reference signal scheme with a high frequency domain density and a great bandwidth, the same sensing performance, including sensing accuracy and sensing range, may be obtained in the embodiments of the present disclosure. Moreover, the resource overhead in the embodiments of the present disclosure is less, and the EPRE is higher, which is particularly important for power-limited devices (such as terminals).

The sensing method involved in the embodiments of the present disclosure may include at least one of step S2201 to S2205. For example, step S2201 may be implemented as an independent embodiment, step S2202 may be implemented as an independent embodiment, step S2201 plus step S2202 may be implemented as an independent embodiment, step S2203 may be implemented as an independent embodiment, step S2204 may be implemented as an independent embodiment, step S2202 plus step S2204 may be implemented as an independent embodiment, step S2203 plus S2204 may be implemented as an independent embodiment, and steps S2204 plus S2205 may be implemented as independent embodiments, which is not limited to this.

In some embodiments, steps S2202 to step S2205 are optional, and one or more of these steps may be omitted or replaced in different embodiments.

In some embodiments, step S2201, and step S2203 to step S2205 are optional, and one or more of these steps may be omitted or replaced in different embodiments.

In some embodiments, step S2203 to step S2205 are optional, and one or more of these steps may be omitted or replaced in different embodiments.

In some embodiments, steps S2201 to step S2202 and S2204 to step S2205 are optional, and one or more of these steps may be omitted or replaced in different embodiments.

In some embodiments, step S2201 to step S2203 and step S2205 are optional, and one or more of these steps may be omitted or replaced in different embodiments.

In some embodiments, step S2201 to step S2202 and step S2205 are optional, and one or more of these steps may be omitted or replaced in different embodiments.

In some embodiments, step S2201 to step S2203 are optional, and one or more of these steps may be omitted or replaced in different embodiments.

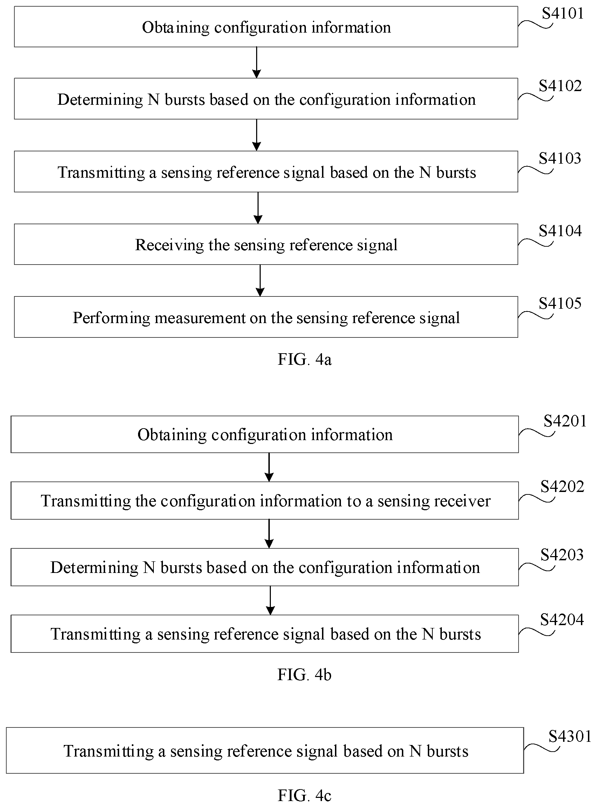

FIG. 4a is a flowchart of a sensing method according to an embodiment of the present disclosure. The embodiment of the present disclosure is performed by a sensing transmitter. As shown in FIG. 4a, the sensing method includes following steps.

In step S4101, configuration information is obtained.

In step S4102, N bursts are determined based on the configuration information.

For optional implementations of step S4101 to step S4102, reference may be made to the optional implementations of step S2101 of FIG. 2a and other associated parts in the embodiments involved in FIG. 2a, and details are not described here again.

In step S4103, a sensing reference signal is transmitted based on the N bursts.

For the optional implementation of step S4103, reference may be made to the optional implementation of step S2102 in FIG. 2a and other associated parts in the embodiments involved in FIG. 2a, and details are not described here again.

In step S4104, the sensing reference signal is received.

In step S4105, measurement is performed on the sensing reference signal.

In the foregoing embodiment, the sensing transmitter obtains configuration information, determines N bursts based on the configuration information, transmits a sensing reference signal based on the N bursts, receives the sensing reference signal, and performs measurement on the sensing reference signal. By combining the measurement results of the sensing reference signals within different bursts, the sensing transmitter may obtain an accurate sensing quantity estimation, thus realizing wireless sensing.

FIG. 4b is a flowchart of a sensing method according to an embodiment of the present disclosure. The embodiment of the present disclosure is performed by a sensing transmitter. As shown in FIG. 4b, the sensing method includes following steps.

In step S4201, configuration information is obtained.

In step S4202, the configuration information is transmitted to a sensing receiver.

In step S4203, N bursts are determined based on the configuration information.

For optional implementations of step S4201 and step S4203, reference may be made to the optional implementations of step S2101 of FIG. 2a, other associated parts in the embodiments involved in FIG. 2a, the optional implementations of step S2201 of FIG. 2b, and other associated parts in the embodiments involved in FIG. 2b. Details are not described here again.

In some embodiments, step S4202 and step S4203 may be performed in an exchanged order or simultaneously.

In step S4204, a sensing reference signal is transmitted based on the N bursts.

For the optional implementations of step S4204, reference may be made to the optional implementations of step S2102 of FIG. 2a, other associated part in the embodiments involved in FIG. 2a, the optional implementations of step S2202 of FIG. 2b, and the other associated parts in the embodiments involved in FIG. 2b. Details are not described herein again.

In the foregoing embodiment, the sensing transmitter obtains configuration information, determines N bursts based on the configuration information, transmits a sensing reference signal based on the N bursts, and transmits the configuration information to a sensing receiver, so that the sensing receiver determines the N bursts based on the configuration information, and receives the sensing reference signal based on the N bursts.

FIG. 4c is a flowchart of a sensing method according to an embodiment of the present disclosure. The embodiments of the present disclosure are performed by a sensing transmitter. As shown in FIG. 4c, the sensing method includes following steps.

In step S4301, a sensing reference signal is transmitted based on N bursts.

Among them, the sensing reference signal is a reference signal used for sensing.

In some embodiments, N is an integer greater than or equal to 2. That is, in the foregoing steps, the sensing reference signal is transmitted based on two or more bursts.

In the foregoing embodiment, the sensing reference signal is transmitted based on the N bursts, which is conducive to performing measurement on the sensing reference signal within different bursts. By combining the measurement results of the sensing reference signal within different bursts, an accurate sensing quantity estimation may be obtained, thus realizing wireless sensing.

For optional implementations of step S4301, reference may be made to the optional implementations of step S2102 of FIG. 2a, other associated parts in the embodiments involved in FIG. 2a, optional implementations of step S2202 of FIG. 2b, and other associated parts in the embodiment involved in FIG. 2b. Details are not described here again.

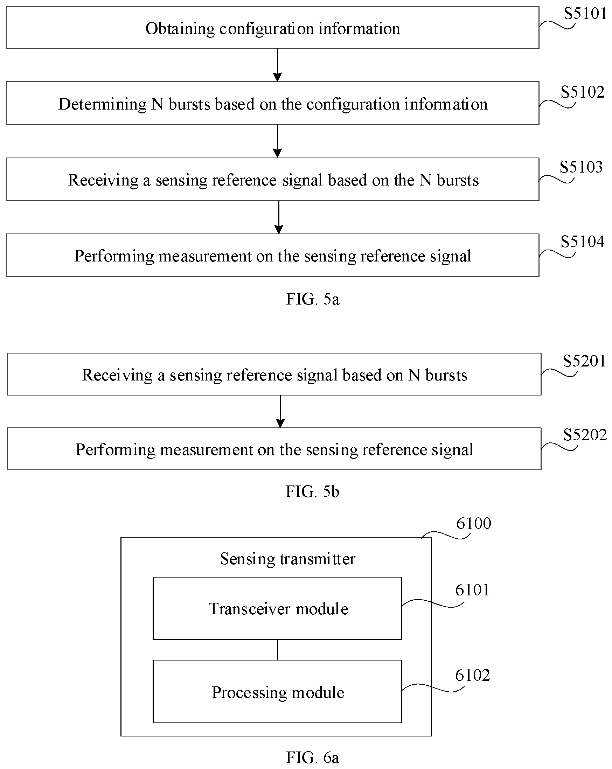

FIG. 5a is a flowchart of a sensing method according to an embodiment of the present disclosure. The embodiments of the present disclosure are performed by a sensing receiver. As shown in FIG. 5a, the sensing method includes following steps.

In step S5101, configuration information is obtained.

In some embodiments, obtaining the configuration information may refer to receiving the configuration information transmitted by a sensing transmitter.

In some embodiments, obtaining the configuration information may refer to receiving the configuration information transmitted by the core network. Optionally, it may refer to receiving the configuration information transmitted by the core network element.

In step S5102, N bursts are determined based on the configuration information.

For optional implementations of step S5101 to step S5102, reference may be made to the optional implementations of step S2203 of FIG. 2b and other associated parts in the embodiment involved in FIG. 2b. Details are not described here again.

In step S5103, a sensing reference signal is received based on the N bursts.

In some embodiments, the sensing receiver receives the sensing reference signal based on resource particles represented by the N bursts.

In step S5104, measurement is performed on the sensing reference signal.

In some embodiments, the sensing receiver obtains configuration information, determines N bursts based on the configuration information, receives a sensing reference signal based on the N bursts, and performs measurement on the sensing reference signal. By combining the measurement results of the sensing reference signal within different bursts, the sensing receiver may obtain an accurate sensing quantity estimation, thus realizing wireless sensing.

FIG. 5b is a flowchart of a sensing method according to an embodiment of the present disclosure. The embodiments of the present disclosure are performed by a sensing receiver. As shown in FIG. 5b, the sensing method includes following steps.

In step S5201, a sensing reference signal is received based on N bursts.

Among them, the sensing reference signal is a reference signal used for sensing.

In some embodiments, N is an integer greater than or equal to 2. That is, in the foregoing steps, the sensing reference signal is received based on two or more bursts.

For optional implementations of step S 5201, reference may be made to the optional implementations of step S2204 of FIG. 2b and other associated parts in the embodiments involved in FIG. 2b. Details are not described here again.

In step S5202, measurement is performed on the sensing reference signal.

In the foregoing embodiment, a sensing reference signal is received based on N bursts, and measurement is performed on the sensing reference signal. By combining the measurement results of the sensing reference signal within different bursts, an accurate sensing quantity estimation may be obtained, thus realizing wireless sensing.

In the embodiments of the present disclosure, some or all of the steps and their optional implementations may be arbitrarily combined with some or all of the steps in other embodiments, or may be arbitrarily combined with optional implementations of other embodiments. Reference may also made to optional implementations of related steps in other embodiments.

According to an embodiment of the present disclosure, there is further provided an apparatus for implementing any one of the above methods. For example, there is provided an apparatus, where the apparatus includes units or modules configured to implement steps performed by the sensing transmitter in any one of the foregoing methods. For another example, there is further provided another apparatus, where the apparatus includes units or modules configured to implement steps performed by the sensing receiver in any one of the foregoing methods.

It should be understood that division of units or modules in the foregoing apparatus is merely a division of logical functions. In actual implementation, all or some of the units may be integrated into one physical entity, or may be physically separated. In addition, the units or modules in the apparatus may be implemented in the form of invoking software by using a processor. For example, the apparatus includes a processor, the processor is connected to a memory, the memory stores instructions, and the processor invokes the instructions stored in the memory to implement any one of the above methods or implement the functions of the units or modules of the foregoing apparatus, where the processor is, for example, a general-purpose processor, such as a central processing unit (CPU) or a microprocessor, and the memory is a memory inside the apparatus or a memory outside the apparatus. Alternatively, the units or modules in the apparatus may be implemented in the form of hardware circuits, and some or all of the units or modules may be implemented by designing hardware circuits. The foregoing hardware circuits may be understood as one or more processors. For example, in an implementation, the hardware circuit is an application-specific integrated circuit (ASIC), and functions of some or all of the units or modules are implemented by designing a logical relationship of elements in the circuit. For another example, in another implementation, the hardware circuit may be implemented by a programmable logic device (PLD). Taking a field programmable gate array (FPGA) as an example, the hardware circuit may include a large quantity of logic gate circuits, and functions of some or all of the units or modules are implemented by configuring the connection relationship between the logic gate circuits using a configuration file. All units or modules of the foregoing apparatus may be implemented in a form of invoking software by using a processor, or all may be implemented in a form of hardware circuits, or a part may be implemented in a form of invoking software by using a processor and the remaining part is implemented in a form of hardware circuits.

In the embodiments of the present disclosure, the processor is a circuit with signal processing capability. In an implementation, the processor may be a circuit with an instruction reading and running capability, such as a central processing unit (CPU), a microprocessor, a graphics processing unit (GPU) (which may be understood as a microprocessor), a digital signal processor (DSP), or the like; In another implementation, the processor may implement a certain function by using a logical relationship of a hardware circuit, and the logical relationship of the hardware circuit is fixed or reconfigurable. For example, the processor is a hardware circuit implemented by an application-specific integrated circuit (ASIC) or a programmable logic device (PLD), such as an FPGA. In a reconfigurable hardware circuit, the process in which a processor loads a configuration document to implement configuration of a hardware circuit may be understood as a process in which a processor loads an instruction to implement the functions of some or all of the units or modules. In addition, the processor may also be a hardware circuit designed for artificial intelligence, which may be understood as an ASIC, such as a neural network processing unit (NPU), a tensor processing unit (TPU), a deep learning processing unit (DPU), or the like.

FIG. 6a is a schematic structural diagram of a sensing transmitter according to an embodiment of the present disclosure. As shown in FIG. 6a, the sensing transmitter 6100 may include at least one of a transceiver module 6101 or a processing module 6102. In some embodiments, the transceiver module is configured to transmit a sensing reference signal based on N bursts. Optionally, the transceiver module is configured to perform at least one of communication steps such as transmitting and/or receiving steps performed by the sensing transmitter in any of the foregoing methods (for example, step S2102, step S2103, and step S2202, but not limited to them), and details are not described here again. Optionally, the processing module is configured to perform at least one of other steps performed by the sensing transmitter in any of the foregoing methods (for example, step S2101, step S2104, and step S2201, but not limited to them), and details are not described here again.

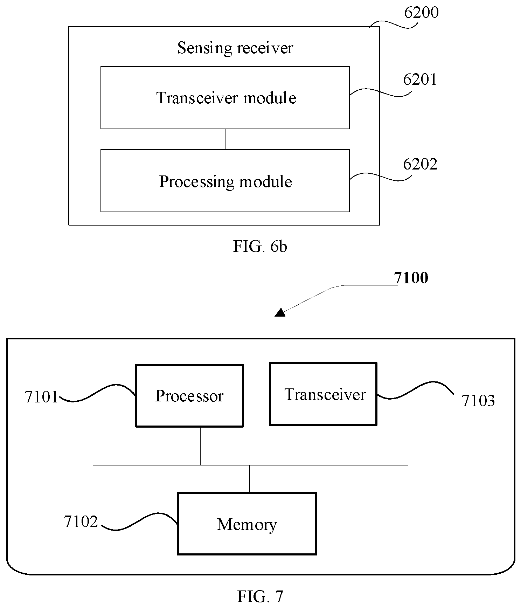

FIG. 6b is a schematic structural diagram of a sensing receiver according to an embodiment of the present disclosure. As shown in FIG. 6b, the sensing receiver 6200 may include at least one of a transceiver module 6201 or a processing module 6202. In some embodiments, the transceiver module is configured to receive a sensing reference signal based on N bursts. In some embodiments, the processing module is configured to perform measurement on the sensing reference signal. Optionally, the transceiver module is configured to perform at least one of communication steps such as transmitting and/or receiving steps performed by the sensing receiver in any of the foregoing methods (for example, step S2204, but not limited to this), and details are not described here again. Optionally, the processing module is configured to perform at least one of other steps performed by the sensing receiver in any of the foregoing methods (for example, step S2203 and step S2205, but not limited to them), and details are not described here again.

In some embodiments, the transceiver module may include a transmitting module and/or a receiving module. The transmitting module and the receiving module may be separated or integrated together. Optionally, the transceiver module may be replaced with the transceiver.

In some embodiments, the processing module may be one module, or may include a plurality of sub-modules. Optionally, the plurality of sub-modules respectively execute all or part of the steps required to be performed by the processing module. Optionally, the processing module may be replaced with the processor.

FIG. 7 is a schematic structural diagram of an electronic device 7100 according to an embodiment of the present disclosure. The electronic device 7100 may be a network device (for example, an access network device), or may be a terminal. Alternatively, the electronic device 7100 may be a chip, a chip system, or a processor that supports the network device to implement any method. Alternatively, the electronic device 7100 may be a chip, a chip system, or a processor that supports the terminal to implement any method. The electronic device 7100 may be configured to implement the method described in the foregoing method embodiments. For details, reference may be made to descriptions in the foregoing method embodiments.

As shown in FIG. 7, the electronic device 7100 includes one or more processors 7101. The processor 7101 may be a general-purpose processor or a special-purpose processor, such as a baseband processor or a central processing unit. The electronic device 7100 is configured to perform any one of the foregoing methods. Optionally, the sensing transmitter may be located in the electronic device 7100, and the electronic device 7100 may be configured to perform the method steps performed by the sensing transmitter in the foregoing embodiments. Optionally, the sensing receiver may be located in the electronic device 7100, and the electronic device 7100 may be configured to perform the method steps performed by the sensing receiver in the foregoing embodiments.

In some embodiments, the electronic device 7100 further includes one or more memories 7102 for storing instructions. Optionally, all or part of the memories 7102 may be located outside the electronic device 7100.

In some embodiments, the electronic device 7100 further includes one or more transceivers 7103. When the electronic device 7100 includes one or more transceivers 7103, the transceivers 7103 perform at least one of the following communication steps such as transmitting and/or receiving steps in the foregoing methods (for example, step S2102, step S2103, step S2202, and step S2204, but not limited them), and the processors 7101 perform at least one of other steps (for example, step S2101, step S2104, step S2201, step S2203, and step S2205, but not limited to them).

In some embodiments, the transceiver may include a receiver and/or transmitter. The receiver and the transmitter may be separate or integrated together. Optionally, terms such as a transceiver, a transceiver unit, a transceiver machine, and a transceiver circuit may be replaced with each other. Terms such as a transmitter, a transmitting unit, a transmitting machine, and a transmitting circuit may be replaced with each other. Terms such as a receiver, a receiving unit, a receiving machine, and a receiving circuit may be replaced with each other.

In some embodiments, the electronic device 7100 may include one or more interface circuits. Optionally, the interface circuit is connected to the memory 7102. The interface circuit may be configured to receive signals from the memory 7102 or other apparatuses, and may be configured to transmit signals to the memory 7102 or other apparatuses. For example, the interface circuit may read the instructions stored in the memory 7102 and transmit the instructions to the processor 7101.

The electronic device 7100 described in the foregoing embodiments may be a network device or a terminal, but the scope of the electronic device 7100 described in the present disclosure is not limited to this, and the structure of the electronic device 7100 may not be limited by FIG. 7. The electronic device may be an independent device or may be part of a larger device. For example, the electronic device may be: 1) an independent integrated circuit IC, a chip, or a chip system or a subsystem; (2) a set with one or more ICs, optionally, the IC set may also include a storage component configured to store data and a program; (3) an ASIC, such as a modem; (4) a module that may be embedded in another device; (5) a receiver, a terminal device, an intelligent terminal device, a cellular phone, a wireless device, a handset, a mobile unit, a vehicle-mounted device, a network device, a cloud device, an artificial intelligence device, or the like; (6) another device, etc.

The present disclosure further provides a storage medium, where the storage medium stores instructions. When the instructions run on the electronic device 7100, the electronic device 7100 is caused to perform any one of the above methods. Optionally, the storage medium is an electronic storage medium. Optionally, the storage medium is a computerreadable storage medium, but is not limited to this. The storage medium may also be a storage medium readable by another apparatus. Optionally, the storage medium may be a nontransitory storage medium, but is not limited to this. The storage medium may also be a transitory storage medium.

The present disclosure further provides a program product. When the program product is executed by the electronic device 7100, the electronic device 7100 is caused to perform any one of the above methods. Optionally, the program product is a computer program product.

The present disclosure further provides a computer program. When the computer program runs on a computer, the computer is caused to perform any of the above methods.

## Claims

1.  A sensing method, wherein the method comprises:
    transmitting a sensing reference signal based on N bursts, wherein the sensing reference signal is a reference signal used for sensing, a burst represents resource units occupied by the sensing reference signal in a time domain and/or a frequency domain, and N is an integer greater than or equal to 2.

2.  The method according to claim 1, wherein bandwidths occupied by the N bursts in the frequency domain are different from each other, and/or frequency domain intervals between OFDM subcarriers occupied by the N bursts in the frequency domain are different from each other.

3.  The method according to claim 2, wherein,

    based on a time domain in which each burst is located, a bandwidth occupied by a later burst is greater than a bandwidth occupied by an earlier burst, and a frequency domain interval between OFDM subcarriers occupied by the later burst is greater than a frequency domain interval between OFDM subcarriers occupied by the earlier burst; or
    based on a time domain in which each burst is located, a bandwidth occupied by a later burst is less than a bandwidth occupied by an earlier burst, and a frequency domain interval between OFDM subcarriers occupied by the later burst is less than a frequency domain interval between OFDM subcarriers occupied by the earlier burst; or
    based on a time domain in which each burst is located, a bandwidth occupied by a later burst is greater than or less than a bandwidth occupied by an earlier burst, and quantities of OFDM subcarriers occupied by the N bursts are the same; or
    based on a time domain in which each burst is located, a frequency domain interval between OFDM subcarriers occupied by a later burst is greater than or less than a frequency domain interval between OFDM subcarriers occupied by an earlier burst, and quantities of OFDM subcarriers occupied by the N bursts are the same.

4.  The method according to claim 1, wherein patterns of OFDM symbols occupied by the N bursts in the time domain are the same.

5. The method according to any one of claims 1 to 4, wherein resource units occupied by the burst in the time domain are indicated by a first set, and/or resource units occupied by the burst in the frequency domain are indicated by a second set, the first set comprises numbers for OFDM symbols occupied by the burst, and the second set comprises numbers for OFDM subcarriers occupied by the burst.

6. The method according to any one of claims 1 to 5, wherein the method comprises:
obtaining configuration information, and determining the N bursts based on the configuration information.

7. The method according to any one of claims 1 to 6, wherein the method comprises:
receiving the sensing reference signal, and performing measurement on the sensing reference signal.

8. The method according to claim 6, wherein the method comprises:
transmitting the configuration information to a sensing receiver.

9. The method according to claim 6 or 8, wherein the configuration information comprises at least one of:

a quantity N of the bursts;
a first set corresponding to at least one burst;
a second set corresponding to at least one burst;
a parameter used to determine the first set corresponding to at least one burst; or
a parameter used to determine the second set corresponding to at least one burst;
wherein the first set is used to indicate resource units occupied by the burst in the time domain, the second set is used to indicate resource units occupied by the burst in the frequency domain, the first set comprises numbers for OFDM symbols occupied by the burst, and the second set comprises numbers for OFDM subcarriers occupied by the burst.

10. The method according to claim 9, wherein the parameter used to determine the first set comprises at least one of:

a start OFDM symbol number for the burst;
a start slot number for the burst;
a start OFDM symbol number for the burst within a start slot;
a symbol interval between OFDM symbols occupied by the burst;
an OFDM symbol number set for the burst within a start slot; or
a total quantity of OFDM symbols occupied by the burst.

11. The method according to claim 9, wherein the parameter used to determine the second set comprises at least one of:

a start OFDM subcarrier number for the burst;
a start PRB number for the burst;
a start OFDM subcarrier number for the burst within a start PRB;
a total quantity of OFDM subcarriers occupied by the burst;
a frequency domain interval between OFDM subcarriers occupied by the burst; or
a frequency domain density of the burst.

12. A sensing method, wherein the method comprises:

receiving a sensing reference signal based on N bursts, wherein the sensing reference signal is a reference signal used for sensing, a burst represents resource units occupied by the sensing reference signal in a time domain and/or a frequency domain, and N is an integer greater than or equal to 2; and
performing measurement on the sensing reference signal.

13. The method according to claim 12, wherein bandwidths occupied by the N bursts in the frequency domain are different from each other, and/or frequency domain intervals between OFDM subcarriers occupied by the N bursts in the frequency domain are different from each other.

14. The method according to claim 13, wherein,

based on a time domain in which each burst is located, a bandwidth occupied by a later burst is greater than a bandwidth occupied by an earlier burst, and a frequency domain interval between OFDM subcarriers occupied by the later burst is greater than a frequency domain interval between OFDM subcarriers occupied by the earlier burst; or

based on a time domain in which each burst is located, a bandwidth occupied by a later burst is less than a bandwidth occupied by an earlier burst, and a frequency domain interval between OFDM subcarriers occupied by the later burst is less than a frequency domain interval between OFDM subcarriers occupied by the earlier burst; or

based on a time domain in which each burst is located, a bandwidth occupied by a later burst is greater than or less than a bandwidth occupied by an earlier burst, and quantities of OFDM subcarriers occupied by the N bursts are the same; or

based on a time domain in which each burst is located, a frequency domain interval between OFDM subcarriers occupied by a later burst is greater than or less than a frequency domain interval between OFDM subcarriers occupied by an earlier burst, and quantities of OFDM subcarriers occupied by the N bursts are the same.

15. The method according to claim 12, wherein patterns of OFDM symbols occupied by the N bursts in the time domain are the same.

16. The method according to any one of claims 12 to 15, wherein resource units occupied by the burst in the time domain are indicated by a first set, and/or resource units occupied by the burst in the frequency domain are indicated by a second set, the first set comprises numbers for OFDM symbols occupied by the bursts, and the second set comprises numbers for OFDM subcarriers occupied by the burst.

17. The method according to any one of claims 12 to 16, wherein the method comprises:
    obtaining configuration information, and determining the N bursts based on the configuration information.

18. The method according to claim 17, wherein the configuration information comprises at least one of:

    a quantity N of the bursts;
    a first set corresponding to at least one burst;
    a second set corresponding to at least one burst;
    a parameter used to determine the first set corresponding to at least one burst; or
    a parameter used to determine the second set corresponding to at least one burst;
    wherein the first set is used to indicate resource units occupied by the burst in the time domain, the second set is used to indicate resource units occupied by the burst in the frequency domain, the first set comprises numbers for OFDM symbols occupied by the burst, and the second set comprises numbers for OFDM subcarriers occupied by the burst.

19. The method according to claim 18, wherein the parameter used to determine the first set comprises at least one of:

    a start OFDM symbol number for the burst;
    a start slot number for the burst;
    a start OFDM symbol number for the burst within a start slot;
    a symbol interval between OFDM symbols occupied by the burst;
    an OFDM symbol number set for the burst within a start slot;
    a total quantity of OFDM symbols occupied by the burst.

20. The method according to claim 18, wherein the parameter used to determine the second set comprises at least one of:

    a start OFDM subcarrier number for the burst;
    a start PRB number for the burst;
    a start OFDM subcarrier number for the burst within a start PRB;
    a total quantity of OFDM subcarriers occupied by the burst;
    a frequency domain interval between OFDM subcarriers occupied by the burst; or
    a frequency domain density of the burst.

21. A sensing transmitter, comprising:
    a transceiver module, configured to transmit a sensing reference signal based on N bursts, wherein the sensing reference signal is a reference signal used for sensing, a burst represents resource units occupied by the sensing reference signal in a time domain and/or a frequency domain, and N is an integer greater than or equal to 2.

22. A sensing receiver, comprising:

   a transceiver module, configured to receive a sensing reference signal based on N bursts, wherein the sensing reference signal is a reference signal used for sensing, a burst represents resource units occupied by the sensing reference signal in a time domain and/or a frequency domain, and N is an integer greater than or equal to 2; and
   a processing module, configured to perform measurement on the sensing reference signal.

23. A sensing transmitter, comprising:

   one or more processors;
   wherein the sensing transmitter is configured to perform the sensing method according to any one of claims 1 to 11.

24. A sensing receiver, comprising:

   one or more processors;
   wherein the sensing receiver is configured to perform the sensing method according to any one of claims 12 to 20.

25. A sensing system, comprising at least one of a sensing transmitter or a sensing receiver, wherein the sensing transmitter is configured to implement the sensing method according to any one of claims 1 to 11, and the sensing receiver is configured to implement the sensing method according to any one of claims 12 to 20.

26. A sensing method, comprising:

   transmitting, by a sensing transmitter, a sensing reference signal based on N bursts, wherein the sensing reference signal is a reference signal used for sensing, a burst represents resource units occupied by the sensing reference signal in a time domain and/or a frequency domain, and N is an integer greater than or equal to 2; and
   receiving, by a sensing receiver, the sensing reference signal based on the N bursts, and performing measurement on the sensing reference signal.

27. The method according to claim 26, wherein bandwidths occupied by the N bursts in the frequency domain are different from each other, and/or frequency domain intervals between OFDM subcarriers occupied by the N bursts in the frequency domain are different from each other.

28. The method according to claim 27, wherein,

   based on a time domain in which each burst is located, a bandwidth occupied by a later burst is greater than a bandwidth occupied by an earlier burst, and a frequency domain interval between OFDM subcarriers occupied by the later burst is greater than a frequency domain interval between OFDM subcarriers occupied by the earlier burst; or
   based on a time domain in which each burst is located, a bandwidth occupied by a later burst is less than a bandwidth occupied by an earlier burst, and a frequency domain interval between OFDM subcarriers occupied by the later burst is less than a frequency domain interval between OFDM subcarriers occupied by the earlier burst; or
   based on a time domain in which each burst is located, a bandwidth occupied by a later burst is greater than or less than a bandwidth occupied by an earlier burst, and quantities of OFDM subcarriers occupied by the N bursts are the same; or
   based on a time domain in which each burst is located, a frequency domain interval between OFDM subcarriers occupied by a later burst is greater than or less than a frequency domain interval between OFDM subcarriers occupied by an earlier burst, and quantities of OFDM subcarriers occupied by the N bursts are the same.

29. The method according to any one of claims 26 to 28, wherein resource units occupied by the burst in the time domain are indicated by a first set, and/or resource units occupied by the burst in the frequency domain are indicated by a second set, the first set comprises numbers for OFDM symbols occupied by the burst, and the second set comprises numbers for OFDM subcarriers occupied by the burst.

**30.** A storage medium, wherein the storage medium stores an instruction, when the instruction runs on an electronic device, the electronic device is caused to perform the sensing method according to any one of claims 1 to 11, or to perform the sensing method according to any one of claims 12 to 20.

Sensing system 100a

Sensing
transmitter
101

FIG. 1a

Sensing system 100b

| Sensing transmitter 101 | Sensing receiver 102 |

FIG. 1b

S2101, the sensing transmitter obtains configuration information, and determines N bursts based on the configuration information

S2102, the sensing transmitter transmits a sensing reference signal based on the N bursts

S2103, the sensing transmitter receives the sensing reference signal.

S2104, the sensing transmitter performs measurement on the sensing reference signal

FIG. 2a

Sensing transmitter

Sensing receiver

S2201, obtaining configuration information, and determining N bursts based on the configuration information

S2203, obtaining configuration information, and determining N bursts based on the configuration information

S2202, the sensing transmitter transmits a sensing reference signal based on the N bursts

S2204, the sensing receiver receives the sensing reference signal based on the N bursts

S2205, performing measurement on the sensing reference signal

FIG. 2b

First burst

Second burst

FIG. 3

Obtaining configuration information — S4101

Determining N bursts based on the configuration information — S4102

Transmitting a sensing reference signal based on the N bursts — S4103

Receiving the sensing reference signal — S4104

Performing measurement on the sensing reference signal — S4105

FIG. 4a

Obtaining configuration information — S4201

Transmitting the configuration information to a sensing receiver — S4202

Determining N bursts based on the configuration information — S4203

Transmitting a sensing reference signal based on the N bursts — S4204

FIG. 4b

Transmitting a sensing reference signal based on N bursts — S4301

FIG. 4c

Obtaining configuration information — S5101

Determining N bursts based on the configuration information — S5102

Receiving a sensing reference signal based on the N bursts — S5103

Performing measurement on the sensing reference signal — S5104

FIG. 5a

Receiving a sensing reference signal based on N bursts — S5201

Performing measurement on the sensing reference signal — S5202

FIG. 5b

6100

Sensing transmitter

Transceiver module — 6101

Processing module — 6102

FIG. 6a

6200

Sensing receiver

Transceiver module

6201

Processing module

6202

FIG. 6b

7100

7101 Processor

Transceiver 7103

7102 Memory

FIG. 7

## INTERNATIONAL SEARCH REPORT

| International application No. |
|---|
| **PCT/CN2023/108761** |

### A. CLASSIFICATION OF SUBJECT MATTER

H04W24/08(2009.01)i

According to International Patent Classification (IPC) or to both national classification and IPC

### B. FIELDS SEARCHED

Minimum documentation searched (classification system followed by classification symbols)

IPC:H04W, H04Q, H04L

Documentation searched other than minimum documentation to the extent that such documents are included in the fields searched

Electronic data base consulted during the international search (name of data base and, where practicable, search terms used)

CNTXT, CNKI, CJFD, WPABS, ENTXT, IEEE, 3GPP: 感知, 参考信号, 测量, 资源单元, 突发, 时域, 频域, sensing, reference signal, measurement, resource unit, time domain, frequency domain, burst

### C. DOCUMENTS CONSIDERED TO BE RELEVANT

| Category* | Citation of document, with indication, where appropriate, of the relevant passages | Relevant to claim No. |
|---|---|---|
| X | WO 2023001183 A1 (VIVO MOBILE COMMUNICATION CO., LTD.) 26 January 2023 (2023-01-26) description, page 5, 2nd-to-last line to page 14, line 4, and page 45, last line to page 46, line 5 | 1, 2, 4-13, 15-27, 29, 30 |
| X | WO 2023134396 A1 (HUAWEI TECHNOLOGIES CO., LTD.) 20 July 2023 (2023-07-20) description, page 1, line 7 to page 29, line 1 | 1, 12, 21-26, 30 |
| A | US 2022060221 A1 (LG ELECTRONICS INC.) 24 February 2022 (2022-02-24) entire document | 1-30 |
| A | WO 2022268104 A1 (HUAWEI TECHNOLOGIES CO., LTD.) 29 December 2022 (2022-12-29) entire document | 1-30 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 November 2023** | **23 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/108761**

| Patent document cited in search report | | | Publication date (day/month/year) | Patent family member(s) | | | Publication date (day/month/year) |
|---|---|---|---|---|---|---|---|
| WO | 2023001183 | A1 | 26 January 2023 | None | | | |
| WO | 2023134396 | A1 | 20 July 2023 | None | | | |
| US | 2022060221 | A1 | 24 February 2022 | WO | 2020067761 | A1 | 02 April 2020 |
| | | | | US | 11632149 | B2 | 18 April 2023 |
| WO | 2022268104 | A1 | 29 December 2022 | None | | | |

Form PCT/ISA/210 (patent family annex) (July 2022)